(19) Europäisches Patentamt
European Patent Office
Office européen des brevets

(11) **EP 3 030 920 B1**

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(21) Anmeldenummer: **14738475.4**

(22) Anmeldetag: **08.07.2014**

(51) Int Cl.:
*G01S 7/35* (2006.01)          *G01F 23/284* (2006.01)
*G01S 13/34* (2006.01)          *G01S 13/88* (2006.01)
*G01S 7/40* (2006.01)

(86) Internationale Anmeldenummer:
**PCT/EP2014/064572**

(87) Internationale Veröffentlichungsnummer:
**WO 2015/018586 (12.02.2015 Gazette 2015/06)**

(54) **DISPERSIONSKORREKTUR FÜR FMCW-RADAR IN EINEM ROHR**

DISPERSION CORRECTION FOR FMCW RADAR IN A PIPE

CORRECTION DE LA DISPERSION DE RADAR FMCW DANS UN TUBE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2013 DE 102013108490**

(43) Veröffentlichungstag der Anmeldung:
**15.06.2016 Patentblatt 2016/24**

(73) Patentinhaber: **Endress+Hauser GmbH+Co. KG
79689 Maulburg (DE)**

(72) Erfinder:
• **MALINOVSKIY, Alexey
79689 Maulburg (DE)**
• **PFLÜGER, Stefan
81379 München (DE)**
• **MAYER, Winfried
89290 Buch (DE)**

(74) Vertreter: **Andres, Angelika Maria
Endress+Hauser (Deutschland) AG+Co. KG
PatServe
Colmarer Strasse 6
79576 Weil am Rhein (DE)**

(56) Entgegenhaltungen:
**EP-A1- 0 955 528          EP-A1- 2 302 338
US-A1- 2010 070 207**

EP 3 030 920 B1

**Beschreibung**

Die Erfindung betrifft eine Radarmessvorrichtung zur Bestimmung einer Entfernung zu einer Oberfläche eines Mediums oder zu einem anderen Radarziel in einem Rohr gemäß dem Oberbegriff des Anspruch 1. Des weiteren betrifft die Erfindung ein Verfahren zur Bestimmung einer Entfernung zu einer Oberfläche eines Mediums oder zu einem anderen Radarziel in einem Rohr mittels einer Radarmessvorrichtung gemäß Anspruch 16.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Als Feldgeräte werden im Prinzip alle Geräte bezeichnet, die prozessnah eingesetzt werden und die prozessreievante Informationen liefern oder verarbeiten.

Eine Vielzahl solcher Feldgeräte wird von der Firma Endress+Hauser hergestellt und vertrieben.

Mit Hilfe von Radarmessvorrichtungen auf der Basis des FMCW-Radars lässt sich der Füllstand in einem Behälter oder Tank genau messen. Bei einer Radarmessung in einem Rohr treten allerdings besondere Effekte auf, weil das Rohr für die Radarwellen als Hohlleiter wirkt und durch eine für Hohlleiter charakteristische Ausbreitungscharakteristik der Radarwellen gekennzeichnet ist.

Ein auf dem FMCW-Prinzip basierendes Füllstandsmessgerät an Rohren (auch unter dem Begriff TDR bekannt: "Time Domain Reflectometry") ist beispielsweise in der Patentanmeldung US 2010/0070207 A1 beschrieben. Das dort vorgestellte Füllstandsmessgerät bestimmt den Füllstand anhand der Phasengeschwindigkeit der reflektierten Signalanteile.

Aufgabe der Erfindung ist es daher, die Genauigkeit der Entfernungsmessung mittels Radar in einem Rohr zu verbessern.

Gelöst wird diese Aufgabe durch die in den Ansprüchen 1 und 16 angegebenen Merkmale.

Vorteilhafte Weiterentwicklungen der Erfindung sind in den Unteransprüchen angegeben.

Eine Radarmessvorrichtung zur Bestimmung einer Entfernung zu einer Oberfläche eines Mediums oder zu einem anderen Radarziel in einem Rohr arbeitet entsprechend dem FMCW-Prinzip und umfasst eine Radarsendeeinheit, welche dazu ausgelegt ist, ein Radarsendesignal zu erzeugen, das entsprechend dem FMCW-Prinzip frequenzmoduliert ist, und eine Radarempfangseinheit, welche dazu ausgelegt ist, ein an der Oberfläche des Mediums oder an dem anderen Radarziel im Rohr zurückreflektiertes Radarempfangssignal zu empfangen, das Radarempfangssignal durch Mischen mit dem Radarsendesignal oder einem davon abgeleiteten Signal in ein Zwischenfrequenzsignal umzuwandeln und anhand des so erhaltenen Zwischenfrequenzsignals eine Entfernung zur Oberfläche des Mediums oder zu dem anderen Radarziel im Rohr zu bestimmen. Die Radarempfangseinheit ist dazu ausgelegt, eine Phasenkorrektur auf den Phasenverlauf des Zwischenfrequenzsignals anzuwenden und ein phasenkorrigiertes Zwischenfrequenzsignal zu erzeugen, wobei die Phasenkorrektur dazu ausgelegt ist, einen dispersionsabhängigen Phasenanteil im Phasenverlauf des Zwischenfrequenzsignals zu verringern oder zu beseitigen und einen nicht von Dispersionseffekten abhängigen Phasenanteil hinzuzufügen. Die Radarempfangseinheit ist dazu ausgelegt, anhand des phasenkorrigierten Zwischenfrequenzsignals die Zielfrequenzkomponenten im Zwischenfrequenzsignal zu bestimmen und anhand der Zielfrequenzkomponenten die Entfernung zur Oberfläche des Mediums oder zu dem anderen Radarziel im Rohr zu bestimmen.

Durch die Anwendung der Phasenkorrektur werden die bei der Wellenausbreitung in einem Rohr infolge von Dispersion auftretenden Effekte verringert oder beseitigt, zusätzlich wird durch die Phasenkorrektur ein linear mit der Zeit ansteigender nicht-dispersiver Phasenanteil hinzugefügt. Infolge dieser Phasenkorrektur können die im Zwischenfrequenzsignal enthaltenen Zielfrequenzkomponenten besser und genauer ausgewertet werden als bisher. Insbesondere wird durch die Phasenkorrektur eine Verbreiterung und ein Auseinanderfließen der verschiedenen Frequenzpeaks im Frequenzspektrum des Zwischenfrequenzsignals verhindert. Die Frequenzpeaks werden schärfer und können genauer ausgewertet werden.

Nachfolgend ist die Erfindung anhand mehrerer in der Zeichnung dargestellter Ausführungsbeispiele näher erläutert.

Es zeigen:

Fig. 1A einen Tank mit einem Schwallrohr und einem Radarmessgerät zur Durchführung einer Füllstandsmessung im Schwallrohr;
Fig. 1B einen Tank mit einem außerhalb des Tanks angeordneten Bypassrohr und mit einem Radarmessgerät zur Durchführung einer Füllstandsmessung im Bypassrohr;
Fig. 2A ein Blockschaltbild eines Entfernungssensors nach dem FMCW-Prinzip;
Fig. 2B den zeitlichen Verlauf der Frequenz eines Sende- und Empfangssignals;
Fig. 3 die Abhängigkeit der Ausbreitungsgeschwindigkeit von der Frequenz für eine bestimme Mode in einem Rohr;
Fig. 4 ein erstes Verfahren zur iterativen Dispersionskorrektur für eine Füllstandsmessung in einem Rohr;

Fig. 5 einen Vergleich des Frequenzspektrums vor Anwendung der Dispersionskorrektur mit dem Frequenzspektrum nach Anwendung der Dispersionskorrektur;

Fig. 6 ein zweites Verfahren zur iterativen Dispersionskorrektur für eine Füllstandsmessung in einem Rohr; und

Fig. 7 einen Phasenverlauf des bandpassgefilterten Zeitsignals vor und nach Anwendung der Dispersionskorrektur.

## Prinzip **der Füllstandsmessung in einem Rohr mittels Radar**

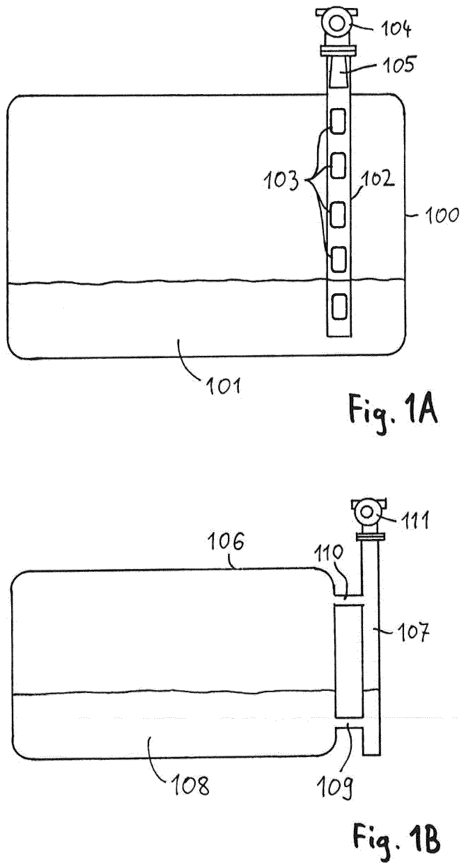

In Fig. 1A ist ein Tank 100 gezeigt, der zum Teil mit einem Medium 101 gefüllt ist. In dem Tank 100 ist ein vertikales Schwallrohr 102 angeordnet, das in das Medium 101 hineinragt. Bei dem Medium 101 kann es sich beispielsweise um eine Flüssigkeit handeln, es kann sich aber auch um ein rieselfähiges Schüttgut handeln. Das Schwallrohr 102 ist an seinem unteren Ende offen. Außerdem weist die Wandung des Schwallrohrs 102 eine Anzahl von Durchbrüchen 103 auf, so dass der Füllstand des Mediums 101 im Inneren des Schwallrohrs 102 dem Füllstand des Mediums 101 außerhalb des Schwallrohrs 102 entspricht. Das Schwallrohr 102 ist zum einen dazu vorgesehen, Bewegungen des Mediums 101 im Tank 100 zu beruhigen. Das Schwallrohr 102 dient insoweit als "Wellenbrecher". Darüber hinaus kann das Schwallrohr 102 zur Bestimmung des Füllstands des Mediums 101 eingesetzt werden. Früher waren hierzu mechanische Verfahren eingesetzt worden, während heute innerhalb des Schwallrohrs 102 eine Füllstandsmessung mittels Radar durchgeführt wird. Hierzu ist am oberen Ende des Schwallrohrs 102 ein Radarmessgerät 104 angebracht. Das Radarmessgerät 104 umfasst eine Radarsendeeinheit, die ein Radarsendesignal erzeugt und über den Wellenleiterübergang 105 in das Schwallrohr 102 einkoppelt. Das ausgesandte Radarsignal wird innerhalb des Schwallrohrs 102 an der Oberfläche des Mediums 101 reflektiert und zum Radarmessgerät 104 zurückgesendet. Das Radarmessgerät 104 umfasst eine Radarempfangseinheit, die das zurückreflektierte Radarsignal empfängt und auswertet.

Anhand des Radarempfangssignals kann dann der Füllstand des Mediums 101 bestimmt werden.

Für die Füllstandsmessung im Tank 100 bietet der Einsatz des Schwallrohrs 102 eine Reihe von Vorteilen. So sorgt die Wandung des Schwallrohrs 102 dafür, dass auch bei stark bewegter Oberfläche des Mediums 101 innerhalb des Schwallrohrs 102 die Oberfläche vergleichsweise ruhig bleibt. Auch wenn es innerhalb des Tanks zu Schaumbildung kommt, kann der Schaum die Messung im Schwallrohr 102 kaum beeinflussen. Falls eine Füllstandsmessung innerhalb eines vergleichsweise kleinen Behältnisses durchgeführt werden soll, steht innerhalb des Behältnisses oft nicht genügend Platz für ein Radarmessgerät zur Verfügung. Für ein Schwallrohr mit vergleichsweise geringem Durchmesser ist dagegen ausreichend Platz vorhanden. Das Radarmessgerät kann dann außerhalb des Behältnisses platziert werden. Ein weiterer Vorteil ist, dass die Radarwellen durch das Schwallrohr 102 auf eine vergleichsweise kleine Fläche konzentriert werden. Dadurch erhält man ein stärkeres Reflektionssignal. Dies ist insbesondere dann von Vorteil, wenn es sich bei dem Medium 101 um eine Flüssigkeit mit einer niedrigen Dielektrizitätskonstante handelt, welche vergleichsweise schlechte Reflektionseigenschaften aufweist. Bei Verwendung eines Schwallrohrs erhält man auch für derartige Flüssigkeiten ein reflektiertes Signal von ausreichender Intensität. Die Verwendung eines Schwallrohrs bietet auch dann Vorteile, wenn es sich bei dem Medium um eine giftige oder gefährliche Chemikalie handelt. Das Schwallrohr 102 ermöglicht die Installation eines zusätzlichen Kugelhahns, der den Tank 100 dicht verschließt, wenn man das Radarmessgerät 104 abnehmen muss. In diesem Fall muss der Tank 100 vor dem Abnehmen des Radarmessgeräts 104 nicht entleert werden.

Vorzugsweise wird zur Bestimmung des Füllstands eine Radarmessung entsprechend dem FMCW (Frequency Modulated Continuous Wave)-Prinzip durchgeführt.

Fig. 1B zeigt ein weiteres Ausführungsbeispiel, bei dem der Füllstand in einem Tank 106 mittels eines außerhalb des Tanks 106 angebrachten Bypassrohrs 107 bestimmt wird. Der Tank 106 ist zum Teil mit einem Medium 108 gefüllt, beispielsweise mit einer Flüssigkeit oder mit einem rieselfähigen Schüttgut. Bei dem Bypassrohr 107 handelt es sich um ein außerhalb des Tanks 106 angeordnetes vertikales Rohr, das über ein unteres Verbindungsrohr 109 und über ein oberes Verbindungsrohr 110 mit dem Tank 106 in Verbindung steht. Daher ist das Bypassrohr 107 teilweise mit dem Medium 108 gefüllt, wobei der Füllstand des Mediums 108 innerhalb des Bypassrohrs 107 dem Füllstand des Mediums 108 im Tank 106 entspricht. Innerhalb des Bypassrohrs 107 wird eine Füllstandsmessung mittels Radar durchgeführt. Hierzu ist am oberen Ende des Bypassrohrs 107 ein Radarmessgerät 111 angebracht. Das Radarmessgerät 111 umfasst eine Radarsendeeinheit, die ein Radarsendesignal erzeugt und in das Bypassrohr 107 einkoppelt. Das Radarsendesignal gelangt innerhalb des Bypassrohrs 107 zur Oberfläche des Mediums 108 und wird an der Oberfläche des Mediums 108 zum Radarmessgerät 111 zurückreflektiert. Das Radarmessgerät 111 umfasst eine Radarempfangseinheit, die das an der Oberfläche des Mediums 108 reflektierte Radarsignal empfängt und auswertet. Anhand des Radarempfangssignals kann dann der Füllstand des Mediums 108 im Bypassrohr 107 und somit auch der Füllstand des Mediums 108 im Tank 106 bestimmt werden.

Vorzugsweise wird zur Bestimmung des Füllstands eine Radarmessung entsprechend dem FMCW (Frequency Modulated Continuous Wave)-Prinzip durchgeführt.

**Entfernungsmessung mittels Radar nach dem FMCW-Prinzip**

Bei der Entfernungsmessung mittels Radar nach dem FMCW (Frequency-Modulated Continuous Wave)-Prinzip wird ein frequenzmoduliertes Radarsignal im Dauerstrichbetrieb ausgesendet und am jeweiligen Ziel reflektiert. Das reflektierte Signal wird vom Entfernungssensor empfangen und ausgewertet.

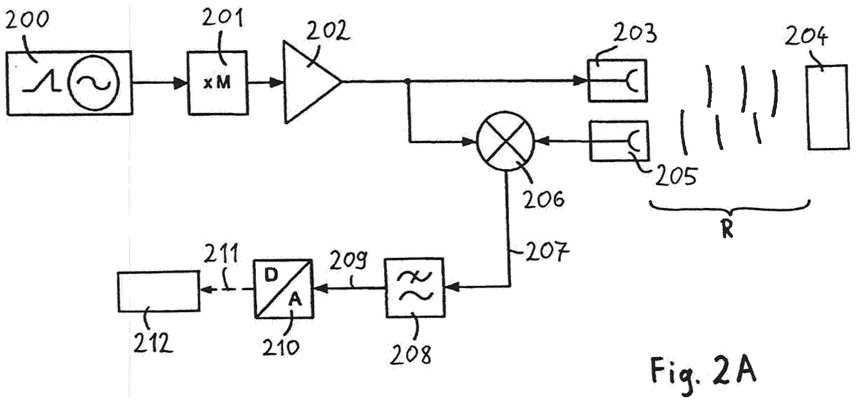

Fig. 2A zeigt ein Blockschaltbild eines Entfernungssensors, der nach dem FMCW-Prinzip arbeitet. Der Sendezweig des Entfernungssensors umfasst einen Signalgenerator 200, der ein frequenzmoduliertes Signal erzeugt. Das vom Signalgenerator 200 erzeugte Signal gelangt über eine Frequenzvervielfachungsstufe 201, in der die Frequenz des Signals entsprechend einem vorgegebenen Faktor vervielfacht wird, zu einem Verstärker 202. Dort wird das Signal verstärkt und anschließend einem Sendetor 203 zugeführt. Über das Sendetor 203 wird das frequenzmodulierte Radar-Sendesignal abgegeben.

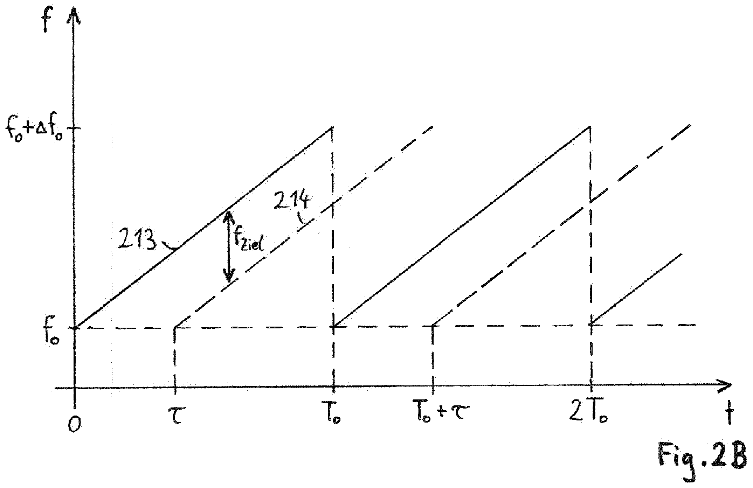

In Fig. 2B ist die Frequenz des erzeugten Sendesignals 213 als Funktion der Zeit dargestellt. Es ist zu erkennen, dass die Frequenz des Sendesignals 213 abwechselnd linear ansteigt und wieder absinkt, so dass sich insgesamt ein dreiecksförmiger Verlauf ergibt. Während einer ersten Modulationsperiodendauer $T_0$ wird die Frequenz des Sendesignals linear von der Frequenz $f_0$ auf die Frequenz $f_0 + \Delta f_0$ erhöht, wobei die Größe $\Delta f_0$ als Frequenzhub bezeichnet wird. Während einer darauffolgenden zweiten Modulationsperiodendauer $T_0$ wird die Frequenz ausgehend von $f_0 + \Delta f_0$ wieder linear auf $f_0$ zurückgeführt. Alternativ zu dem dreiecksförmigen Verlauf könnte die Frequenz des Sendesignals auch einen sägezahnförmigen Frequenzverlauf aufweisen.

Die Frequenz $f_s(t)$ des Sendesignals 213 steigt als Funktion der Zeit mit der Steigung S an:

$$f_s(t) = f_0 + S \cdot t \qquad (1)$$

Die Steigung S ist durch den Frequenzhub $\Delta f_0$ und die Modulationsperiodendauer $T_0$ festgelegt:

$$S = \frac{\Delta f_0}{T_0} \qquad (2)$$

Die Frequenzen von Radar-Sendesignalen bewegen sich beispielsweise im Bereich von etwa 4 GHz bis 100 GHz. Der Frequenzhub $\Delta f_0$ könnte beispielsweise einige GHz betragen. Die Modulationsperiodendauer könnte beispielsweise aus dem Bereich zwischen etwa 0,1 msec und 5 msec gewählt werden. Diese Angaben dienen lediglich zur Illustration typischer Größenordnungen, es sind allerdings auch Lösungen außerhalb dieser Bereiche möglich.

Wie in Fig. 2A gezeigt ist, wird ein Teil des abgestrahlten Sendesignals durch ein im Abstand R vom Entfernungssensor befindliches Ziel 204 zum Entfernungssensor zurückreflektiert. Für den Weg vom Sendetor 203 zum Ziel 204 und zurück zum Empfangstor 205 benötigt das Radarsignal eine Laufzeit $\tau$.

Das reflektierte Signal wird vom Empfangstor 205 des Entfernungssensors empfangen und einem Empfangsmischer 206 zugeführt. Im Empfangsmischer 206 wird das Empfangssignal mit dem momentan ausgesendeten Sendesignal gemischt. Das so erzeugte Mischersignal 207 wird durch einen Abtasttiefpass 208 gefiltert, welcher Frequenzkomponenten oberhalb einer Grenzfrequenz unterdrückt. Durch den Abtasttiefpass 208 wird die Bandbreite des Mischersignals 207 vor der Digitalisierung begrenzt. Außerdem wird durch die Grenzfrequenz eine maximale Entfernung $R_{max}$ festgelegt. Das tiefpassgefilterte Zwischenfrequenzsignal 209 wird durch einen Analog-Digital-Wandler 210 abgetastet und digitalisiert. Das so erhaltene digitalisierte Zwischenfrequenzsignal 211 enthält Zielfrequenzkomponenten zu einem oder mehreren Zielen, aus denen sich jeweils die zugehörigen Zielentfernungen bestimmen lassen. Das digitalisierte Zwischenfrequenzsignal 211 wird der digitalen Signalverarbeitungseinheit 212 zur Auswertung zugeführt, welche die im Zwischenfrequenzsignal enthaltenen Frequenzkomponenten bestimmt.

Vorzugsweise führt die digitale Signalverarbeitungseinheit 212 eine Fourier-Transformation (Fast Fourier Transform, FFT) der Abtastwerte durch, wobei aus den Peaks des Fourierspektrums dann unmittelbar die Entfernungen bestimmt werden können.

Entfernungssensoren der in Fig. 2A gezeigten Art können beispielsweise als Füllstandsmessgeräte in der Prozessmesstechnik eingesetzt werden, um den Abstand zu einer Oberfläche einer Flüssigkeit oder eines Schüttguts in einem Behälter zu bestimmen.

**Signalausbreitung im Freifeldfall**

Wenn das Sendesignal 213 frei abgestrahlt wird (sogenannter "Freifeldfall"), dann breitet sich das Signal mit der Lichtgeschwindigkeit c aus. Ein Teil des abgestrahlten Sendesignals wird durch das Ziel 204 zum Entfernungssensor zurückreflektiert.

Für diesen Freifeldfall lässt sich die Laufzeit $\tau$, die das Signal für die Strecke von der Sendeeinheit zum Ziel 204 und zurück zur Empfangseinheit benötigt, folgendermaßen ausdrücken:

$$\tau = \frac{2 \cdot R}{c} \tag{3}$$

Dabei bezeichnet R den Zielabstand und c die Lichtgeschwindigkeit in Luft. Die Lichtgeschwindigkeit in Luft c hängt mit der Lichtgeschwindigkeit $c_0$ im Vakuum über die Beziehung $c = \dfrac{c_0}{\sqrt{\varepsilon_r}}$ zusammen, wobei $\varepsilon_r$ die Dielektrizitätskonstante von Luft bezeichnet.

Während der vom Radarsignal benötigten Laufzeit $\tau$ steigt das vom Signalgenerator erzeugte Sendesignal 213 weiter an, so dass die Frequenz des momentan abgestrahlten Sendesignals höher ist als die Frequenz des Empfangssignals. Das um die Laufzeit $\tau$ zeitversetzte Empfangssignal 214 für den Freifeldfall ist in Fig. 2B gestrichelt eingezeichnet. Infolge der Laufzeit $\tau$ des Radarsignals ergibt sich daher ein für die Laufzeit $\tau$ charakteristischer Frequenzunterschied zwischen Sende- und Empfangssignal, der als Zielfrequenz $f_{Ziel}$ bezeichnet wird. Für den Freifeldfall lässt sich die Zielfrequenz $f_{Ziel}$ aus der Steigung S des Sendesignals und der Laufzeit $\tau$ herleiten. Für den Freifeldfall ergibt sich die Zielfrequenz $f_{Ziel}$ zu

$$f_{Ziel} = S \cdot \tau = S \cdot \frac{2 \cdot R}{c} \tag{4}$$

Da die Größen S und c konstant sind, ergibt sich im Freifeldfall eine direkte Proportionalität zwischen der Zielfrequenz $f_{Ziel}$ und der zugehörigen Zielentfernung R. Aus der Zielfrequenz $f_{Ziel}$ lässt sich daher unmittelbar die Zielentfernung R ableiten.

**Signalausbreitung in einem Rohr**

Die Ausbreitung des Radarsignals in einem Rohr unterscheidet sich deutlich von der Ausbreitung des Radarsignals im freien Feld, weil die Wandung des Rohrs die Wellenausbreitung begrenzt und führt. Für das Radarsignal wirkt das Rohr als Rundhohlleiter.

Unter Beachtung der Bedingungen für Rundhohlleiter lässt sich aus den Maxwell-Gleichungen die Differentialgleichung für die Wellenausbreitung in Rundhohlleitern aufstellen. Die Lösung dieser Differentialgleichung sind die Besselfunktionen, die das Ausbreitungsverhalten des Radarsignals im Rundhohlleiter beschreiben.

Dabei ergeben sich für die Signalausbreitung im Rundhohlleiter unterschiedliche Moden. Als Moden werden bestimmte elektrische und magnetische Feldkonfigurationen bezeichnet, die sich in dem Hohlleiter ausbreiten können. Grundsätzlich gibt es zwei verschiedene Arten von Moden im Hohlleiter: Die $TE_{m,n}$-Moden (transversal elektrisch) und die $TM_{m,n}$-Moden (transversal magnetisch). Bei den $TE_{m,n}$-Moden ist der elektrische Feldvektor senkrecht zur Ausbreitungsrichtung der Welle orientiert. Bei den $TM_{m,n}$-Moden ist der magnetische Feldvektor senkrecht zur Ausbreitungsrichtung der Welle orientiert.

Für die Ausbreitung von elektromagnetischen Wellen in Hohlleitern ist charakteristisch, dass sich die elektromagnetische Welle im Hohlleiter nur dann ausbreiten kann, wenn ihre Frequenz oberhalb einer definierten Cutoff-Frequenz $f_c$ liegt. Für elektromagnetische Wellen mit einer Frequenz unterhalb dieser charakteristischen Cutoff-Frequenz $f_c$ ist keine Wellenausbreitung im Hohlleiter möglich. Die Cutoff-Frequenz $f_c$ ist für jede Mode unterschiedlich und kann für jede Mode individuell berechnet werden.

Für eine TE-Mode $TE_{m,n}$ ergibt sich die zugehörige Cutoff-Frequenz $f_{c,mn}$ wie folgt:

$$f_{c,mn} = \frac{c \cdot \chi'_{mn}}{\pi \cdot D} \tag{5}$$

In dieser Gleichung bezeichnet $\chi'_{mn}$ die n-te Nullstelle der Ableitung der m-ten Besselfunktion $J_m(x)$, c bezeichnet die Lichtgeschwindigkeit in Luft, und D bezeichnet den Durchmesser des Rundhohlleiters (also des Rohrs).

Für eine TM-Mode $TM_{m,n}$ ergibt sich die zugehörige Cutoff-Frequenz $f_{c,mn}$ wie folgt:

$$f_{c,mn} = \frac{c \cdot \chi_{mn}}{\pi \cdot D} \tag{6}$$

In dieser Gleichung bezeichnet $\chi_{mn}$ die n-te Nullstelle der m-ten Bessel-Funktion $J_m(x)$, c bezeichnet die Lichtgeschwindigkeit in Luft, und D bezeichnet den Durchmesser des Rundhohlleiters (also des Rohrs).

Im Freifeldfall breiten sich Radarwellen mit der Lichtgeschwindigkeit c in Luft aus. Im Freifeldfall hängt die Ausbreitungsgeschwindigkeit daher nicht von der Frequenz des Radarsignals ab.

Im Hohlleiter breiten sich die einzelnen Moden jeweils mit einer Gruppengeschwindigkeit $v_g$ aus, die mit der Lichtgeschwindigkeit c in Luft über den Faktor $\beta_{rel,mn}$ zusammenhängt:

$$v_g = c \cdot \beta_{rel,mn} \tag{7}$$

Der Faktor $\beta_{rel,mn}$ sieht folgendermaßen aus:

$$\beta_{rel,mn} = \sqrt{1 - \left(\frac{f_{c,mn}}{f}\right)^2} \tag{8}$$

Dabei bezeichnet $f_{c,mn}$ die Cutoff-Frequenz der jeweiligen Mode und f die Frequenz des Radarsignals. Der Faktor $\beta_{rel,mn}$ liefert Werte im Bereich zwischen 0 und 1.

Insgesamt lässt sich die Gruppengeschwindigkeit $v_g$ einer Mode im Hohlleiter also wie folgt ausdrücken:

$$v_g = c \cdot \sqrt{1 - \left(\frac{f_{c,mn}}{f}\right)^2} \tag{9}$$

Die Antennenstruktur zur Einkopplung des Radarsignals in das Rohr ist vorzugsweise so ausgelegt, dass die Energie im Wesentlichen nur zur Anregung einer einzigen Mode eingesetzt wird. Da jede Mode ein unterschiedliches Ausbreitungsverhalten hat, möchte man die Ausbildung von vielen unterschiedlichen Moden bei der Radarmessung in Rohren vermeiden. Falsche oder verschwommene Echos, die aus den unterschiedlichen Laufzeiten der verschiedenen einander überlagerten Moden resultieren, wären sonst die Folge. Besonders vorteilhaft ist die Anregung der Mode $TE_{01}$, weil sich die Feldkonfiguration dieser Mode für eine Ausbreitung im Rohr besonders gut eignet.

Im Folgenden soll der Fall diskutiert werden, dass im Wesentlichen nur eine einzige Mode in signifikantem Ausmaß angeregt wird. Später wird dann auch noch der Fall diskutiert, dass die Anregungsenergie sich auf mehrere unterschiedliche Moden aufteilt, von denen sich jede mit einem anderen Ausbreitungsverhalten ausbreitet. Dieser Fall wird später unter dem Stichwort "Multimodendispersion" genauer diskutiert.

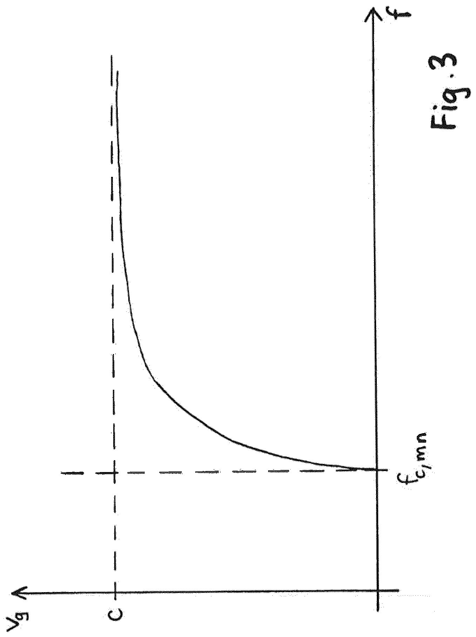

Zur Veranschaulichung des Ausbreitungsverhaltens von Radarsignalen im Hohlleiter ist in Fig. 3 die Gruppengeschwindigkeit $v_g$ im Hohlleiter als Funktion der Frequenz aufgetragen. Auf der Rechtsachse von Fig. 3 ist die Cutoff-Frequenz $f_{c,mn}$ für eine bestimmte Mode eingezeichnet. Für Frequenzen unterhalb dieser Cutoff-Frequenz ist keine Wellenausbreitung im Hohlleiter möglich. Die Wellenausbreitung im Hohlleiter beginnt bei der Cutoff-Frequenz $f_{c,mn}$. Mit steigender Frequenz nimmt die Gruppengeschwindigkeit $v_g$ im Hohlleiter zu und nähert sich zunehmend der Lichtgeschwindigkeit c in Luft an.

Anhand von Fig. 3 ist zu erkennen, dass die Gruppengeschwindigkeit $v_g$ im Hohlleiter, also die Ausbreitungsgeschwindigkeit des Radarsignals im Hohlleiter, eine starke Abhängigkeit von der Frequenz des Radarsignals aufweist. Radarsignalkomponenten von unterschiedlicher Frequenz breiten sich im Hohlleiter mit unterschiedlicher Geschwindigkeit aus.

Bei der Füllstandsmessung in einem Rohr wird ein entsprechend den Prinzipien des FMCW-Radars frequenzmoduliertes Radarsignal in das Rohr eingekoppelt. Da die Frequenz des eingekoppelten FMCW-Radarsignals entsprechend der in Fig. 2B gezeigten Rampe variiert, variiert auch die Ausbreitungsgeschwindigkeit des Radarsignals. Durch die unterschiedlichen Ausbreitungsgeschwindigkeiten wird ein Verschmieren und Auseinanderlaufen des reflektierten Radarsignals verursacht, das vom Radarmessgerät ausgewertet werden muss. Diese Frequenzabhängigkeit der Ausbreitungsgeschwindigkeit wird als Dispersion bezeichnet. Die durch diese frequenzabhängige Ausbreitungsgeschwindigkeit verursachten Effekte, insbesondere das Verschmieren und Auseinanderlaufen des reflektierten Signals, werden als dispersive Effekte bezeichnet. Im Folgenden soll eine Korrektur für diese dispersiven Effekte hergeleitet werden.

**Durch Dispersion hervorgerufene Effekte im Phasenverlauf des Zwischenfrequenzsignals**

Das Sendesignal eines FMCW-Radars in Form einer Frequenzrampe kann entsprechend Gleichung (1) durch dessen Momentanfrequenz $f_s(t)$ beschrieben werden:

$$f_s(t) = f_0 + S \cdot t \tag{1}$$

Dabei bezeichnet $f_0$ die Startfrequenz und $S$ die Steigung der Frequenzrampe. Die Frequenz steigt beginnend bei der Startfrequenz $f_0$ mit der Steigung $S$ linear an. Die Steigung $S$ ist entsprechend Gleichung (2) durch den Frequenzhub $\Delta f_0$ und die Modulationsperiodendauer $T_0$ festgelegt:

$$S = \frac{\Delta f_0}{T_0} \tag{2}$$

Allgemein lässt sich das Sendesignal durch seine Momentanphase $\varphi_s(t)$ angeben:

$$s(t) = \cos(\varphi_s(t)) \tag{10}$$

Die Momentanphase $\varphi_s(t)$ kann durch Integration aus der Momentanfrequenz $f_s(t)$ berechnet werden:

$$\varphi_s(t) = 2\pi \int_0^t f_s(\bar{t})d\bar{t} = 2\pi f_0 t + \pi S t^2 + \varphi_{s,0} \tag{11}$$

Das Sendesignal läuft innerhalb des Rohrs bis zu einem Radarziel. Bei dem Radarziel kann es sich z.B. um die Oberfläche der Flüssigkeit oder des Schüttguts handeln. Das Sendesignal wird an diesem Radarziel in der Entfernung R reflektiert und läuft zum Radarmessgerät zurück. Hierdurch kommt es zu einer frequenzabhängigen Verzögerungszeit $\tau(f)$, die sich aufgrund des linear ansteigenden Rampenverlaufs auch in einfacher Weise in Abhängigkeit von der Zeit t schreiben lässt:

$$\tau(t) = \frac{2 \cdot R}{c \cdot \beta_{rel}(f)} \tag{12}$$

$$= \frac{2 \cdot R}{c \cdot \sqrt{1 - \left(\dfrac{f_{c,mn}}{f_s(t)}\right)^2}}$$

$$= \frac{2 \cdot R}{c \cdot \sqrt{1 - \left(\dfrac{f_{c,mn}}{f_0 + S \cdot t}\right)^2}}$$

Für das Empfangssignal gilt damit:

$$e(t) = \cos(\varphi_e(t)) \tag{13}$$

$$\varphi_e(t) = 2\pi \int_0^t f_s\left(\bar{t} - \tau(\bar{t})\right) d\bar{t} \tag{14}$$

$$= 2\pi \int_0^t f_0 + S \cdot \left(\bar{t} - \tau(\bar{t})\right) d\bar{t}$$

$$= 2\pi \int_0^t f_0 + S \cdot \bar{t} - S\tau(\bar{t}) d\bar{t}$$

$$= 2\pi f_0 t + \pi S t^2 - 2\pi S \cdot \int_0^t \tau(\bar{t}) d\bar{t} + \varphi_{e,0}$$

Zur Erzeugung des Zwischenfrequenzsignals wird in dem in Fig. 2A gezeigten Empfangsmischer 206 das Sendesignal mit dem Empfangssignal gemischt, um auf diese Weise das Zwischenfrequenzsignal zu erzeugen. Das gefilterte Zwischenfrequenzsignal spiegelt (bei Annahme eines idealen Mischers) die Phasendifferenz zwischen der Phase $\varphi_s(t)$ des Sendesignals und der Phase $\varphi_e(t)$ des Empfangssignals wider. Die Mischung von Sendesignal und Empfangssignal führt also zu einem folgendermaßen darstellbaren Zwischenfrequenzsignal:

$$z(t) = \cos(\varphi_z(t)) \tag{15}$$

$$\varphi_z(t) = \varphi_s(t) - \varphi_e(t) \tag{16}$$

$$= 2\pi S \cdot \int_0^t \tau(\bar{t}) d\bar{t} + \Delta\varphi$$

$$= 2\pi \frac{2SR}{c} \cdot \int_0^t \frac{1}{\beta_{rel}(f_0 + S \cdot \bar{t})} d\bar{t} + \Delta\varphi$$

$$= 2\pi \frac{2R}{c} \left. \frac{(f_0 + f_c + St)(f_0 - f_c + St)}{(f_0 + St)\sqrt{\dfrac{f_0^2 + 2f_0St + S^2t^2 - f_c^2}{(f_0 + St)^2}}} \right|_{t=0}^{t} + \Delta\varphi$$

$$= 2\pi \frac{2R}{c} \cdot \left. \sqrt{(f_0 + St)^2 - f_c^2} \right|_{t=0}^{t} + \Delta\varphi$$

$$= 2\pi \frac{2R}{c} \cdot \left( \sqrt{(f_0 + St)^2 - f_c^2} - \sqrt{f_0^2 - f_c^2} \right) + \Delta\varphi$$

Diese Gleichung fasst die dispersiven Effekte im Phasenverlauf des Zwischenfrequenzsignals zusammen, die durch die Frequenzabhängigkeit der Gruppengeschwindigkeit verursacht werden. Dabei wurden sämtliche zeitunabhängigen Phasenbeiträge in der Startphase $\Delta\varphi$ zusammengefasst.

**Bestimmung der Startphase $\Delta\varphi$**

Sämtliche zeitunabhängigen Phasenbeiträge der Phase $\varphi_z(t)$ des Zwischenfrequenzsignals wurden in der Startphase $\Delta\varphi$ zusammengefasst. Diese Startphase $\Delta\varphi$ soll im Folgenden bestimmt werden. Die Startphase $\Delta\varphi$ lässt sich aus der Differenz der Phase $\varphi_s(t)$ des Sendesignals und der Phase $\varphi_e(t)$ des Empfangssignals zum Zeitpunkt t=0 abschätzen.

Die Phase $\varphi_s(t)$ des Sendesignals kann entsprechend Gleichung (11) geschrieben werden als:

$$\varphi_s(t) = 2\pi \int_0^t f_s(\bar{t}) d\bar{t} = 2\pi f_0 t + \pi S t^2 + \varphi_{s,0} \tag{11}$$

Hinsichtlich der Phase $\varphi_e(t)$ des Empfangssignals wird zur Bestimmung der Startphase $\Delta\varphi$ eine Abschätzung vorgenommen. Für die Bestimmung der Startphase $\Delta\varphi$ wird angenommen, dass die Laufzeit $\tau$ konstant ist und nicht von der Frequenz abhängt. Für die Bestimmung der Startphase $\Delta\varphi$ wird also wie im Freifeldfall die Dispersion vernachlässigt. Dieser Ansatz ist für ein Rohr streng genommen falsch, denn in einem Rohr hängen die Ausbreitungsgeschwindigkeit und damit auch die Laufzeit $\tau$ von der Frequenz des Radarsignals ab. Dennoch kann der folgende Ausdruck, bei dem eine konstante frequenzunabhängige Laufzeit $\tau$ angesetzt wird, zur Abschätzung der Startphase $\Delta\varphi$ der Zwischenfrequenz herangezogen werden:

$$\begin{aligned}\varphi_e(t) &= \varphi_s(t-\tau) \\ &= 2\pi f_0(t-\tau) + \pi S(t-\tau)^2 + \varphi_{s,0} \\ &= 2\pi f_0 t - 2\pi f_0\tau + \pi S t^2 + \pi S\tau^2 - 2\pi S t\tau + \varphi_{s,0}\end{aligned} \tag{17}$$

Für die Startphase $\Delta\varphi$ ergibt sich dann:

$$\begin{aligned}\Delta\varphi &= \varphi_s(0) - \varphi_e(0) = \\ &= 2\pi\, f_0\tau(0) + \pi S\,\tau^2(0)\end{aligned} \tag{18}$$

Entsprechend Gleichung (12) ergibt sich $\tau(0)$ zu:

$$\tau(0) = \frac{2\cdot R}{c\cdot\beta_{rel}(f_0)} \tag{19}$$

Damit ergibt sich die Startphase $\varphi_z(0)$ zu:

$$\varphi_z(0) = \Delta\varphi = 2\pi f_0\,\frac{2R}{c\cdot\beta_{rel}(f_0)} + \pi S\left(\frac{2R}{c\cdot\beta_{rel}(f_0)}\right)^2 \bmod 2\pi \tag{20}$$

**Herleitung einer Dispersionskorrektur**

Das Zwischenfrequenzsignal $z(t)$ ist nach einer Fourier-Transformation als Entfernungsantwort des Radarsystems interpretierbar. Durch den nicht-linearen Phasenverlauf kommt es bei der Fourier-Transformation zu einer Verschmierung der Zielantwort im Spektralbereich.

Im Folgenden sollen die Möglichkeiten zur Auswertung des Zwischenfrequenzsignals unter Dispersionseinfluss sowie unter Beachtung weiterer Fehlerquellen diskutiert werden.

Entsprechend den Ausführungsformen der Erfindung wird vorgeschlagen, bereits vor der weiteren Auswertung eine Korrektur des Dispersionseinflusses auf die Phase vorzunehmen. Dann kann beispielsweise eine diskrete Fourier-Transformation bzw. eine FFT zur Auswertung herangezogen werden, ohne dass eine erhebliche Verbreiterung und Verschmierung der Peaks im Spektralbereich hingenommen werden muss.

Im Folgenden wird eine additive Phasenkorrektur hergeleitet, die auf die Phase des Zwischenfrequenzsignals vor Durchführung der diskreten Fourier-Transformation bzw. FFT angewendet wird. Diese Phasenkorrektur hat zum einen die Aufgabe, den durch die Dispersion verursachten Phasenverlauf entsprechend Gleichung (16) zu verringern bzw. zu eliminieren. Darüber hinaus wird eine linear mit der Zeit ansteigende Phase hinzugefügt, wie sie bei einem System mit konstanter, frequenzunabhängiger Gruppengeschwindigkeit $v_{const}$ auftreten würde. Dabei fließt der Durchmesser D des Hohlleiters bzw. die daraus resultierende Cutoff-Frequenz $f_c$ in die Rechnung ein. Die aus dem gemessenen Durchmesser D hergeleitete und mit Messunsicherheit behaftete Cutoff-Frequenz wird im Folgenden als $\hat{f}_c$ bezeichnet. Insofern ergibt sich folgende Phasenkorrektur:

$$\varphi_{z,corr}(t) = 2\pi\frac{2R}{c}\cdot\left(\sqrt{(f_0+St)^2 - \hat{f}_c^2} - \sqrt{f_0^2 - \hat{f}_c^2}\right) - 2\pi\frac{2RS}{v_{const}}\cdot t \tag{21}$$

Der erste Term

$$2\pi \frac{2R}{c} \cdot \left( \sqrt{(f_0 + St)^2 - \hat{f}_c{}^2} - \sqrt{f_0{}^2 - \hat{f}_c{}^2} \right) \tag{22}$$

dient zur Verringerung bzw. Eliminierung des durch Dispersion verursachten Phasenverlaufs.

Der zweite Term

$$-2\pi \frac{2RS}{v_{const}} \cdot t \tag{23}$$

dient zur Hinzufügung einer linear mit der Zeit ansteigenden Phase, die sich bei konstanter, frequenzunabhängiger Gruppengeschwindigkeit $v_{const}$ ergeben würde. Die konstante frequenzunabhängige Ausbreitungsgeschwindigkeit $V_{const}$ kann in gewissen Grenzen frei festgelegt werden. Beispielsweise kann $V_{const}$ festgelegt werden als Gruppengeschwindigkeit bei der Frequenz $f_0$: $v_{const} = c \cdot \beta_{rel}(f_0)$, oder aber $V_{const}$ kann festgelegt werden als Lichtgeschwindigkeit c in Luft: $v_{const} = c$

## Abhängigkeit der Dispersionskorrektur von der Zielentfernung R

Allerdings ist anhand von Gleichung (21) zu erkennen, dass sowohl der erste Term als auch der zweite Term der Phasenkorrektur $\varphi_{z,corr}(t)$ von der Zielentfernung R abhängen, die zum Zeitpunkt der Bestimmung der Phasenkorrektur ja noch nicht bekannt ist. Die Zielentfernung R soll ja erst bestimmt werden.

Um die durch Gleichung (21) beschriebene Phasenkorrektur $\varphi_{z,corr}(t)$ trotzdem durchführen zu können, gibt es verschiedene Möglichkeiten:

Eine erste Möglichkeit ist, die Zielentfernung R durch eine Auswertung des nicht dispersionskorrigierten Zwischenfrequenzsignals abzuschätzen, das vom Empfangsmischer 206 geliefert wird. Die so erhaltene Zielentfernung $R_{schätz}$ ist zwar nicht genau, sie kann aber für eine erste Bestimmung der Phasenkorrektur $\varphi_{z,corr}(t)$ herangezogen werden.

Eine zweite Möglichkeit zur Abschätzung der Zielentfernung ist dann möglich, wenn der Füllstand eines Behältnisses zyklisch in regelmäßigem zeitlichem Abstand bestimmt wird. In diesem Fall kann man von der Annahme ausgehen, dass der Füllstand sich langsam und kontinuierlich ändert. Daher liegen zwei nacheinander ermittelte Füllstandsmesswerte relativ nah beieinander. Insofern kann ein vorhergehender Füllstandsmesswert als Abschätzung für den aktuellen Füllstandsmesswert dienen. Basierend auf dieser Annahme kann ein vorhergehender Füllstandsmesswert als Schätzwert $R_{schätz}$ für die Zielentfernung verwendet werden.

## Iterative Bestimmung der Zielentfernung R und der Phasenkorrektur $\varphi_{z,corr}(t)$ in wechselseitiger Abhängigkeit

Eine noch höhere Genauigkeit kann durch den Einsatz eines iterativen Verfahrens erreicht werden. Dabei dient wiederum ein Schätzwert der Zielentfernung als Ausgangspunkt für eine Bestimmung der Phasenkorrektur $\varphi_{z,corr}(t)$. Die Phasenkorrektur $\varphi_{z,corr}(t)$ wird zur Korrektur des Zwischenfrequenzsignals herangezogen, und ausgehend vom phasenkorrigierten Zwischenfrequenzsignal kann beispielsweise mittels FFT ein verbesserter genauerer Wert der Zielentfernung R ermittelt werden. Mit Hilfe dieses genaueren Werts von R wird die Phasenkorrektur erneut bestimmt und zur Korrektur des Zwischenfrequenzsignals herangezogen. Das so erhaltene phasenkorrigierte Zwischenfrequenzsignal kann dann wiederum zur Bestimmung des Zielabstands R mit noch besserer Genauigkeit dienen, etc. Insofern können die Zielentfernung R und die Phasenkorrektur $\varphi_{z,corr}(t)$ in wechselseitiger Abhängigkeit iterativ bestimmt werden. Im Verlauf von mehreren Iterationen konvergiert die Zielentfernung R gegen ihren tatsächlichen Wert und auch die Phasenkorrektur $\varphi_{z,corr}(t)$ wird immer genauer, so dass dispersive Effekte immer besser eliminiert werden. Durch diese Iterative Vorgehensweise erhält man bereits nach einigen wenigen Iterationen sehr genaue Werte für die Zielentfernung R und die Phasenkorrektur $\varphi_{z,corr}(t)$.

## Auswertung des phasenkorrigierten Zwischenfrequenzsignals

Subtrahiert man den Phasenkorrekturterm $\varphi_{z,corr}(t)$ von der gemessenen Phase, so verbleibt idealerweise (bei fehlerfrei bekanntem Rohrdurchmesser) ein linear mit der Zeit ansteigender Phasenverlauf, der durch den zweiten Term von Gleichung (21) hervorgerufen wird. Dieser lineare Phasenverlauf kann mit der Fourier-Transformation auf einfache

Weise ausgewertet werden:

$$\varphi_c(t) = \varphi_z(t) - \varphi_{z,corr}(t) \qquad (24)$$
$$= 2\pi \frac{2RS}{v_{const}} \cdot t$$

Auf diese Weise erhält man die Zielfrequenzkomponente $f_{Ziel}$:

$$f_{Ziel} = \frac{\omega}{2\pi} = \frac{1}{2\pi} \frac{d}{dt} \varphi_c(t) = \frac{2RS}{v_{const}} \qquad (25)$$

Aus der so ermittelten Zielfrequenzkomponente kann dann die Zielentfernung R abgeleitet werden:

$$R = \frac{f_{Ziel} \cdot v_{const}}{2S} \qquad (26)$$

Zur Auswertung wird wieder genau diejenige Ausbreitungsgeschwindigkeit $V_{const}$ verwendet, das bereits in Gleichung (21) zur Erzeugung des linear ansteigenden zweiten Phasenterms verwendet worden war. Wenn also dort $v_{const} = c \cdot \beta_{rel}(f_0)$ gesetzt worden war, dann wird auch zur Auswertung wieder $v_{const} = c \cdot \beta_{rel}(f_0)$ verwendet. Wenn als $v_{const}$ die Lichtgeschwindigkeit c verwendet worden war, $v_{const} = C$, dann wird auch zur Auswertung wieder $v_{const} = C$ verwendet.

**Keine Änderung der Startphase $\varphi_z(0)$ durch die Phasenkorrektur**

Anhand von Gleichung (21) ist erkennbar, dass für t = 0 die Startphase $\varphi_z(0)$ durch die Phasenkorrektur nicht geändert wird. Diese Startphase kann also ebenfalls aus dem Ergebnis der komplexen Fourier-Transformation an der Position des Betragsmaximums im Spektralbereich (modulo $2\pi$) abgelesen werden. Für die Phase $\varphi_z(0)$ gilt daher weiterhin entsprechend Gleichung (20):

$$\varphi_z(0) = 2\pi f_0 \frac{2R}{c \cdot \beta_{rel}(f_0)} + \pi S \left( \frac{2R}{c \cdot \beta_{rel}(f_0)} \right)^2 \bmod 2\pi \qquad (20)$$

Durch die Anwendung der Dispersionskorrektur wird die Phaseninformation des Zwischenfrequenzsignals nicht beeinträchtigt. Auch nach der Anwendung der Dispersionskorrektur auf die Phase kann die Phaseninformation im Rahmen der weiteren Signalauswertung noch genutzt werden. Insofern können nach der Durchführung der Phasenkorrektur sowohl der Betrag als auch die Phase des Zwischenfrequenzsignals für die weitere Auswertung verwendet werden. Dabei ist anzumerken, dass die Phase deutlich weniger empfindlich auf kleine Störungen reagiert, während eine reine Auswertung des Betragsspektrums bereits nennenswerte Abweichungen in der exakten Positionsbestimmung des Maximums zeigt.

**Detaillierter Ablauf des Verfahrens zur Ermittlung von Zielentfernung und Dispersionskorrektur**

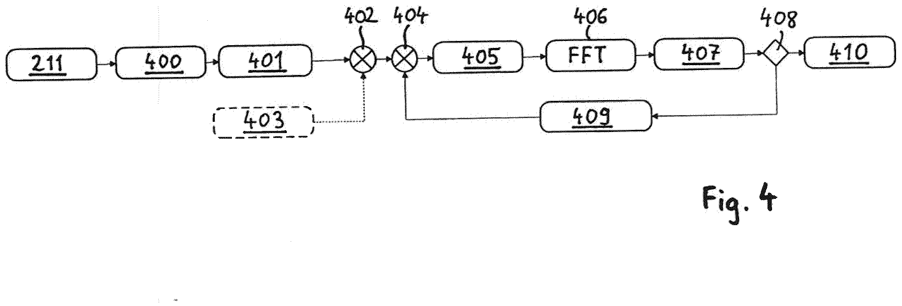

In dem in Fig. 4 gezeigten Flussdiagramm ist detailliert dargestellt, wie die Dispersionskorrektur sowie die Zielentfernung mittels eines iterativen Verfahrens bestimmt werden können. Als Ausgangspunkt dient das in Fig. 2A gezeigte digitalisierte Zwischenfrequenzsignal 211. Bei dem digitalisierten Zwischenfrequenzsignal 211 handelt es sich um ein reellwertiges Zeitsignal.

Zunächst wird im Schritt 400, der auch als "DC Remove" bezeichnet wird, der Gleichanteil des Zwischenfrequenzsignals entfernt. Als Ergebnis erhält man ein reellwertiges Zeitsignal, das unterschiedliche Frequenzkomponenten, aber keinen Gleichanteil mehr aufweist. Für dieses Signal wird im nächsten Schritt 401 eine Hilbert-Transformation durchgeführt. Mit Hilfe der Hilbert-Transformation können Real- und Imaginärteil eines komplexwertigen Signals aufeinander abgebildet werden. Im folgenden Fall wird die Hilbert-Transformation im Schritt 401 dazu verwendet, zu dem reellwertigen Zwischenfrequenzsignal einen zugehörigen Imaginärteil zu erzeugen, um auf diese Weise ein vollständiges komplexwertiges Zeitsignal bereitstellen zu können. Die folgenden Operationen werden dann für dieses komplexwertige Zeitsignal durchgeführt.

In einem darauffolgenden optionalen Schritt wird in der Mischstufe 402 eine gerätespezifische Korrekturkurve auf das Signal angewendet. Durch die Anwendung der gerätespezifischen Korrekturkurve auf das Signal können die spezifischen Übertragungseigenschaften des jeweiligen Radarmessgeräts berücksichtigt werden. Die gerätespezifischen Korrekturkurve wird im Schritt 403 erzeugt und erfasst das Übertragungsverhalten des Radarmessgeräts, welches das HF-Modul, den Modenwandler mit HF-Antenne sowie verschiedene Anschlusskabel, Leitungsstücke und Steckverbinder umfasst.

Im Folgenden werden zwei verschiedene Möglichkeiten vorgestellt, wie diese gerätespezifischen Eigenschaften des Radarmessgeräts erfasst und berücksichtigt werden können.

**Erste** Möglichkeit **der Gerätekorrektur:** Durchführung **einer** Referenzmessung

Zur Erfassung der Übertragungseigenschaften des Radarmessgeräts wird eine Referenzmessung $z_{ref}(t)$ eines bekannten Ziels durchgeführt. Nach Herausfiltern aller unerwünschten Ziele wird die Referenzmessung $z_{ref}(t)$ mit Hilfe der Hilbert-Transformation zu einem komplexwertigen analytischen Signal ergänzt. Daraus kann dann sowohl der Phasenverlauf $\angle H\{z_{ref}(t)\}$ der Referenzzielantwort sowie der Amplitudenverlauf $|H\{z_{ref}(t)\}|$ der Referenzzielantwort abgeleitet werden. Insbesondere der Phasenverlauf $\angle H\{z_{ref}(t)\}$ kann zur gerätespezifischen Korrektur des komplexwertigen Zwischenfrequenzsignals herangezogen werden:

$$z_{korrigiert}(t) = \frac{H\{z_{gemessen}(t)\}}{e^{-j\angle H\{z_{ref}(t)\}}} \tag{27}$$

Auf diese Weise können die spezifischen Besonderheiten des jeweiligen Messsystems mit Hilfe der Referenzmessung $z_{ref}(t)$ berücksichtigt werden. Dabei erweist es sich als vorteilhaft, ausschließlich eine Korrektur der Phase vorzunehmen, nicht jedoch der Amplitude. Würde man eine Korrektur der Amplitude vornehmen wollen, so könnte es aufgrund von Nullstellen in der Übertragungsfunktion zu Schwierigkeiten kommen, außerdem würde das Rauschen in Bereichen geringer Transmission angehoben. Allerdings kann der durch die Referenzmessung ermittelte Amplitudenverlauf $|H\{z_{ref}(t)\}|$ als Gewichtungsfaktor in der Auswertung dienen. Dabei würde ein geringerer Transmissionsfaktorbetrag, welcher einem geringeren Signal-Rausch-Verhältnis (Signal-to-Noise Ratio, SNR) entspricht, eine geringere Gewichtung des Messwerts zur Folge haben.

Alternativ zur Durchführung einer Referenzmessung soll im Folgenden eine zweite, etwas einfachere Möglichkeit zur Durchführung einer gerätespezifischen Korrektur diskutiert werden.

**Zweite Möglichkeit der Gerätekorrektur: Aufteilen der Messstrecke in einen nicht-dispersiven Streckenanteil und einen dispersiven Streckenanteil**

Bei einem realen Radarmesssystem legen die Radarwellen einen Teil der Gesamtentfernung R noch innerhalb des Sensors selbst zurück, welcher ein HF-Modul, einen Modenwandler, eine Antenne sowie diverse Anschlusskabel, Leitungsstücke und Steckverbinder umfasst. In diesem Teilabschnitt können die Wellenleiterdispersionseffekte vernachlässigt werden, da sie viel schwächer als im Rohr ausgeprägt sind. Dieser durch ein nicht-dispersives Ausbreitungsverhalten gekennzeichnete Teilabschnitt wird mit $R_{non}$ bezeichnet. Der verbleibende restliche Teil der Gesamtentfernung R wird in dem Rohr zurückgelegt, so dass die Ausbreitung hier mit Dispersion behaftet ist. Dieser Teilabschnitt der Übertragungsstrecke wird als $R_{disp}$ bezeichnet. Somit gilt:

$$R = R_{non} + R_{disp} \tag{28}$$

Die Verzögerungszeit $\tau(t)$ beim Durchlaufen der kompletten Übertragungsstrecke ergibt sich zu

$$\tau(t) = \frac{2R_{non}}{c} + \frac{2R_{disp}}{c \cdot \beta_{rel}(f)} \tag{29}$$

Damit ergibt sich für die Dispersionskorrektur:

$$\varphi_{z,corr}(t) = 2\pi \frac{2R_{disp}}{c} \cdot \left( \sqrt{(f_0 + St)^2 - \hat{f}_c{}^2} - \sqrt{f_0{}^2 - \hat{f}_c{}^2} \right) - 2\pi \frac{2\,R_{disp} \cdot S}{v_{const}} \cdot t \qquad (30)$$

Diese Gleichung entspricht genau der Gleichung (21), wobei anstelle von R der dispersionsbehaftete Streckenanteil $R_{disp} = R - R_{non}$ eingesetzt wurde.

Durch diese Aufteilung der gesamten Messstrecke in einen nicht-dispersiven Streckenanteil und einen durch Dispersion gekennzeichneten Streckenanteil können die gerätespezifischen Besonderheiten auf einfache Weise berücksichtigt werden.

Nach der Durchführung der gerätespezifischen Korrektur in der Mischstufe 402 wird in der darauffolgenden Mischstufe 404 eine Dispersionskorrektur auf das Zwischenfrequenzsignal angewandt. Anschließend wird in den folgenden drei Schritten 405, 406, 407 die Zielentfernung R ermittelt. Im Schritt 405 wird eine "Fensterung" des aufbereiteten zeitdiskreten Zwischenfrequenzsignals durchgeführt. Dies bedeutet, dass die Werte des komplexwertigen Signals mit einer Fensterfunktion gewichtet werden, um unerwünschte Effekte, die durch die Beschränkung des Beobachtungsfensters hervorgerufen werden, zu vermeiden. Im Schritt 406 wird eine schnelle Fourier-Transformation (Fast Fourier Transform, FFT) durchgeführt. Als Ergebnis der Fourier-Transformation erhält man ein komplexwertiges Frequenzspektrum, das für jede im Zwischenfrequenzsignal enthaltene Zielfrequenzkomponente einen entsprechenden Frequenzpeak umfasst. Im darauffolgenden Schritt 407 werden die Peaks im Frequenzspektrum detektiert. Aus den so erhaltenen Zielfrequenzkomponenten wird dann die Zielentfernung R abgeleitet. Im Schritt 408 wird ermittelt, ob zur genauen Bestimmung der Zielentfernung noch weitere Iterationen durchgeführt werden müssen oder nicht. Sobald sich die ermittelte Zielentfernung nicht mehr signifikant ändert, können die Iterationen abgebrochen werden.

Falls eine weitere Iteration durchgeführt wird, dient die in der n-ten Iteration ermittelte Zielentfernung $R_n$ als Ausgangspunkt für die Neuberechnung der Dispersionskorrektur in Schritt 409. Man erhält entsprechend Gleichung (21) für die n-te Interation die Phasenkorrektur $\varphi_{z,corr,n}(t)$, die in der Mischerstufe 404 zur Phasenkorrektur des Zwischenfrequenzsignals verwendet wird. Diese Phasenkorrektur kann geschrieben werden als:

$$\varphi_c(t) = \varphi_z(t) - \varphi_{z,corr,n}(t) \qquad (31)$$

Dabei bezeichnet $\varphi_z(t)$ die Phase des Zwischenfrequenzsignals vor der Korrektur, $\varphi_{z,corr,n}(t)$ bezeichnet die in Schritt 409 bestimmte Phasenkorrektur, und $\varphi_c(t)$ bezeichnet die korrigierte Phase des Zwischenfrequenzsignals.

Alternativ zu der bisher beschriebenen Darstellung, bei der zur Phase des Zwischenfrequenzsignals ein Phasenkorrekturterm addiert (bzw. subtrahiert) wird, kann die Phasenkorrektur auch durch eine Quotientenbildung ausgedrückt werden. Dabei wird das komplexwertige gemessene Zwischenfrequenzsignal durch ein komplexwertiges Korrektursignal geteilt, um auf diese Weise ein phasenkorrigiertes Zwischenfrequenzsignal zu erhalten:

$$\hat{z}_{phasenkorrigiert,n}(t) = Re\left\{ \frac{H\{z_{gemessen}(t)\}}{H\{z_{corr,R_n}(t)\}} \right\} \qquad (32)$$

In dieser Gleichung bezeichnet $H\{z_{gemessen}(t)\}$ die Hilberttransformierte des gemessenen reellwertigen Zwischenfrequenzsignals $z_{gemessen}(t)$. $H\{z_{corr},R_n(t)\}$ bezeichnet die Hilberttransformierte des Korrektursignals $z_{corr},R_n(t)$, das in Schritt 409 basierend auf der Zielentfernung $R_n$ bestimmt wurde. Das Korrektursignal $z_{corr},R_n(t)$ ist dazu ausgelegt, die dispersiven Effekte im Zwischenfrequenzsignal zu eliminieren und durch einen linearen Phasenverlauf zu ersetzen.

Das phasenkorrigierte Zwischenfrequenzsignal $\hat{z}_{phasenkorrigiert,n}(t)$ erhält man als Realteil des Quotienten aus $H\{z_{gemessen}(t)\}$ und $H\{z_{corr},R_n(t)\}$. Die in Fig. 4 gezeigte Mischerstufe 404 ist dazu ausgebildet, diese komplexwertige Quotientenbildung durchzuführen und so das phasenkorrigierte Signal $\hat{z}_{phasenkorrigiert,n}(t)$ zu erzeugen.

Die in Fig. 4 gezeigte Iteration wird so oft durchgeführt, bis sowohl die Zielentfernung R als auch die Phasenkorrektur $\varphi_{z,corr}(t)$ hinreichend genau bestimmt sind. So wird in einer ersten Iteration (n=1) eine erste Zielentfernung $R_1$ erhalten, die dann in Schritt 409 zur Bestimmung einer ersten Phasenkorrektur $\varphi_{z,corr,1}(t)$ herangezogen wird. Durch Anwenden dieser Phasenkorrektur $\varphi_{z,corr,1}(t)$ auf das Zwischenfrequenzsignal wird ein phasenkorrigiertes Zwischenfrequenzsignal erzeugt, dessen Auswertung die etwas genauere Zielentfernung $R_2$ liefert. Basierend auf $R_2$ wird im Schritt 409 die noch genauere Phasenkorrektur $\varphi_{z,corr,2}(t)$ bestimmt und auf das Zwischenfrequenzsignal angewandt. Anhand des so phasenkorrigierten Zwischenfrequenzsignals kann ein dritter, noch genauerer Zielentfernungswert $R_3$ bestimmt werden, der dann wiederum zur Bestimmung einer Phasenkorrektur $\varphi_{z,corr,3}(t)$ eingesetzt wird, und so weiter.

Diese Iterationen werden so lange fortgesetzt, bis im Schritt 408 festgestellt wird, dass sich die ermittelte Zielentfernung nicht mehr signifikant ändert. In diesem Fall sind sowohl die Zielentfernung als auch die Phasenkorrektur zu ihren endgültigen Werten hin konvergiert. Diese Bedingung für die Beendigung der Iterationen ist im folgenden Pseudocode etwas genauer dargestellt:

```
R := Startwert
DO
 s := SimuliereDispersion(R);
 c := real (hilbert(messung) / hilbert(s));
 Rn := findePositionDesEntfernungsmaximums(c);
 delta = abs(R-Rn);
 R := Rn;
WHILE delta > epsilon
```

So lange die Differenz zwischen der aktuell ermittelten Zielentfernung und der eine Iteration zuvor ermittelten Zielentfernung größer ist als ein vorgegebenes Epsilon, wird die Iteration fortgesetzt. Sobald das vorgegebene Epsilon unterschritten wird, wird die Iteration abgebrochen. Als Ergebnis erhält man in Schritt 410 die Zielentfernung sowie die Dispersionskorrektur mit der gewünschten Genauigkeit.

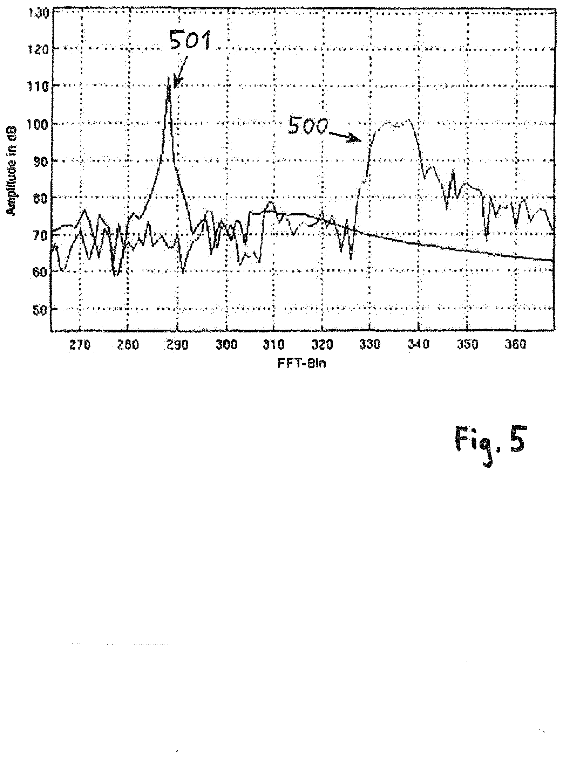

In Fig. 5 ist das Frequenzspektrum des Zwischenfrequenzsignals vor und nach der Durchführung der iterativen Phasenkorrektur gezeigt. Vor der Durchführung der Phasenkorrektur ist der zur Zielentfernung R gehörige Frequenzpeak 500 infolge von dispersiven Effekten stark verbreitert und verwaschen. Nach der Durchführung der Phasenkorrektur erhält man den deutlich schmaleren Frequenzpeak 501. Es ist erkennbar, dass mit Hilfe der iterativen Phasenkorrektur die Dispersionseffekte weitestgehend beseitigt werden können. Ausgehend von dem scharf definierten Frequenzpeak 501 kann die Zielentfernung R mit hoher Genauigkeit ermittelt werden. Der Vergleich zwischen dem verbreiterten Peak 500 vor der Durchführung der Dispersionskorrektur und dem scharf konturierten Peak 501 nach Durchführung der Dispersionskorrektur zeigt, dass die Genauigkeit der Füllstandsmessung in einem Rohr durch Anwenden der iterativen Phasenkorrektur deutlich verbessert werden kann.

**Alternative Vorgehensweise: Iterative Bestimmung von Dispersionskorrektur und Zielentfernung mittels des Phasensteigungsverfahrens**

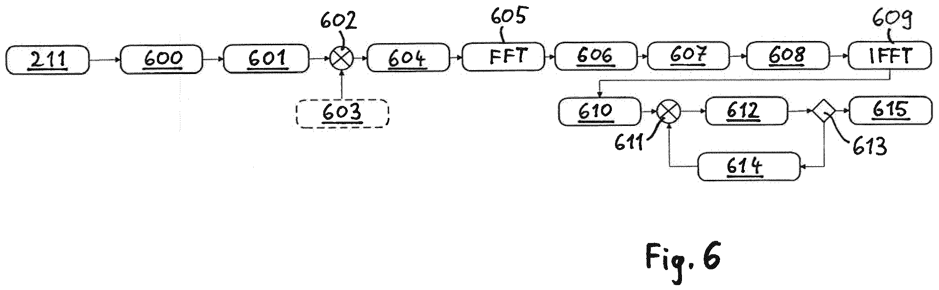

In Fig. 6 ist ein alternatives Verfahren zur iterativen Bestimmung von Zielentfernung und Phasenkorrektur gezeigt. Als Ausgangspunkt dient wiederum das in Fig. 2A gezeigte digitalisierte Zwischenfrequenzsignal 211. Bei dem digitalisierten Zwischenfrequenzsignal 211 handelt es sich um ein reellwertiges Signal im Zeitbereich. Im Schritt 600, der auch als "DC-Remove" bezeichnet wird, wird zunächst der Gleichanteil des digitalisierten Zwischenfrequenzsignals 211 beseitigt. Die verschiedenen im Zwischenfrequenzsignal enthaltenen Frequenzkomponenten bleiben dabei erhalten. Anschließend wird im Schritt 601 eine Hilbert-Transformation durchgeführt, bei der zu dem reellwertigen Zwischenfrequenzsignal der zugehörige Imaginärteil berechnet wird. Als Ergebnis der Hilbert-Transformation erhält man ein vollständiges komplexwertiges Zwischenfrequenzsignal im Zeitbereich. Dieses komplexwertige Signal dient dann als Grundlage für die weiteren in Fig. 6 gezeigten Operationen.

In einem darauffolgenden optionalen Schritt wird in der Mischerstufe 602 eine gerätespezifische Korrekturkurve auf das Signal angewendet. Mit Hilfe dieser gerätespezifischen Korrekturkurve können die spezifischen Besonderheiten der Radarmessgeräts berücksichtigt werden, die u.a. durch das HF-Modul, den Modenwandler, die Antenne sowie durch HF-Kabel, Verbindungsstücke und Steckverbinder verursacht werden. Zur Erzeugung dieser gerätespezifischen Korrekturkurve in Schritt 603 gibt es unterschiedliche Möglichkeiten, die bereits im Zusammenhang mit Fig. 4 diskutiert worden waren. Eine erste Möglichkeit zur Ermittlung der gerätespezifischen Korrekturkurve ist, eine Referenzmessung für ein bekanntes Ziel durchzuführen und aus dieser Referenzmessung die gerätespezifische Phasenantwort abzuleiten. Eine zweite, etwas einfachere Möglichkeit ist, die gesamte Übertragungsstrecke, welche die Länge R besitzt, aufzuteilen in einen nicht dispersionsbehafteten Streckenabschnitt $R_{non}$ und einen dispersionsbehafteten Streckenabschnitt $R_{disp}$: $R = R_{non} + R_{disp}$. Dadurch ist es auf einfache Weise möglich, die Übertragungseigenschaften des HF-Moduls, des Modenwandlers und der Antenne am Beginn der Übertragungsstrecke zu modellieren.

In Schritt 604, der sogenannten "Fensterung", werden die Werte des komplexwertigen Signals mit einer Fensterfunktion gewichtet. Die gewichteten Werte dienen dann als Eingangsgrößen für die im darauffolgenden Schritt 605 durchgeführte schnelle Fourier-Transformation (Fast Fourier Transform, FFT). Als Ergebnis der schnellen Fourier-Transformation erhält man das Frequenzspektrum des Zwischenfrequenzsignals. Im darauffolgenden Schritt 606 werden die in diesem Frequenzspektrum enthaltenen Zielfrequenzkomponenten detektiert. Dabei ist jeder Frequenzpeak im Frequenzspektrum einem Radarziel zugeordnet. Von besonderem Interesse für die Füllstandsmessung ist dabei der Frequenzpeak, der durch die Reflektion der Radarsignale an der Oberfläche der Flüssigkeit bzw. des Mediums hervorgerufen wurde. Dieser für die Füllstandsmessung relevante Frequenzpeak wird im Schritt 606 identifiziert.

Im darauffolgenden Schritt 607 wird dann ein digitales Bandpassfilter definiert, das dazu ausgelegt ist, den durch die Oberfläche des Mediums hervorgerufenen Frequenzpeak aus dem Frequenzspektrum herauszufiltern und andere störende Frequenzpeaks zu unterdrücken. Hierzu werden die untere Grenzfrequenz sowie die obere Grenzfrequenz des Bandpassfilters so festgelegt, dass der durch die Oberfläche des Mediums hervorgerufene Frequenzpeak innerhalb des Durchlassbereichs des Bandpassfilters liegt. Störende Frequenzkomponenten, die unterhalb der unteren Grenzfrequenz oder oberhalb der oberen Grenzfrequenz des Bandpassfilters liegen, werden weggefiltert. Als Ergebnis der in Schritt 607 durchgeführten Bandpassfilterung erhält man ein Frequenzspektrum, das im Wesentlichen nur mehr einen einzigen Frequenzpeak enthält, nämlich den für die Füllstandsmessung relevanten Frequenzpeak, der durch Reflektion an der Oberfläche des Mediums hervorgerufen wurde.

Dieses bandpassgefilterte Frequenzspektrum wird anschließend mittels einer inversen Fourier-Transformation in den Zeitbereich zurücktransformiert. Hierzu wird in Schritt 608 eine Fensterung des bandpassgefilterten Frequenzspektrums durchgeführt. Dabei werden die Werte des bandpassgefilterten Frequenzspektrums mit einer Fensterfunktion gewichtet. Anschließend wird im Schritt 609 eine inverse schnelle Fourier-Transformation (Inverse Fast Fourier Transform, IFFT) durchgeführt. Als Ergebnis der inversen schnellen Fourier-Transformation erhält man ein komplexwertiges Zeitsignal, das im Wesentlichen nur mehr eine einzige Frequenzkomponente enthält, nämlich die Frequenzkomponente, die bei der Reflektion des Radarsignals an der Oberfläche des Mediums entstanden ist. Im nächsten Schritt 610, der auch als "Phase Unwrapping" bezeichnet wird, wird aus dem komplexwertigen Zeitverlauf der Phasenverlauf rekonstruiert. Da das komplexwertige Zeitsignal im Wesentlichen nur eine Frequenzkomponente enthält, nämlich die durch die Reflektion an der Oberfläche des Mediums verursachte Frequenzkomponente, ergibt sich im Wesentlichen ein linear mit der Zeit anwachsender kontinuierlicher Phasenverlauf. Bei der Rekonstruktion dieses Phasenverlaufs aus dem rücktransformierten komplexwertigen Zeitsignal kommt es insbesondere darauf an, Phasensprünge zu vermeiden, um so die linear anwachsende Phase korrekt zu rekonstruieren.

Allerdings weist der rekonstruierte Phasengang noch Verzerrungen auf, die durch die Dispersion bei der Wellenausbreitung im Rohr verursacht sind. Diese dispersiven Effekte werden in der darauffolgenden Mischerstufe 611 verringert bzw. eliminiert. In der Mischerstufe 611 wird dem Zeitsignal eine Phasenkorrektur $\varphi_{z,corr}$ aufgeprägt, die durch die oben hergeleitete Gleichung (21) gegeben ist:

$$\varphi_{z,corr}(t) = 2\pi \frac{2R}{c} \cdot \left( \sqrt{(f_0 + St)^2 - \hat{f}_c{}^2} - \sqrt{f_0{}^2 - \hat{f}_c{}^2} \right) - 2\pi \frac{2RS}{v_{const}} \cdot t \qquad (21)$$

Diese Phasenkorrektur ist dazu ausgelegt, Dispersionseffekte ganz oder teilweise zu beseitigen. Für das so erhaltene phasenkorrigierte Zeitsignal wird im folgenden Schritt 612 eine lineare Regression des Phasenverlaufs vorgenommen. Die Phase $\varphi_c(t)$ des phasenkorrigierten Zeitsignals steigt im Wesentlichen linear mit der Zeit an:

$$\varphi_c(t) \approx 2\pi \frac{2RS}{v_{const}} \cdot t \qquad (33)$$

Insofern ist die Phasensteigung $2\pi \dfrac{2RS}{v_{const}}$ proportional zur Zielentfernung R. Je weiter das Ziel entfernt ist, desto steiler wird die Phase ansteigen. Mittels der linearen Regression in Schritt 612 lässt sich daher unmittelbar die Zielentfernung R herleiten.

Im Schritt 613 wird geprüft, ob die ermittelte Zielentfernung R bereits hinreichend genau ist, oder ob zur weiteren Steigerung der Genauigkeit weitere Iterationen durchgeführt werden sollen. Falls weitere Iterationen durchgeführt werden, wird die soeben ermittelte Zielentfernung R als Ausgangspunkt für eine erneute Bestimmung der Dispersionskorrektur $\varphi_{z,corr}$ im Schritt 614 verwendet. Die so bestimmte Phasenkorrektur wird in der Mischerstufe 611 auf das Zeitsignal angewandt, und für das so erhaltene phasenkorrigierte Signal wird dann wiederum eine lineare Regressionsanalyse zur Ermittlung der Phasensteigung durchgeführt. Aus der Phasensteigung kann nun ein genauerer Wert der Zielentfernung hergeleitet werden, der dann wiederum als Grundlage für eine Neubestimmung der Dispersionskorrektur in Schritt 614 verwendet werden kann. Durch die iterative Bestimmung von Phasensteigung, Zielentfernung und Dispersionskorrektur ist es möglich, diese Größen mit einer gewünschten Genauigkeit zu bestimmen. Sobald in Schritt 613 ermittelt wird, dass die Zielentfernung mit hinreichend hoher Genauigkeit ermittelt ist, werden die Iterationen abgebrochen. Als Ergebnis erhält man in Schritt 615 einen sehr genauen Wert der Zielentfernung, also der Entfernung zwischen dem Radarmessgerät und der Oberfläche des Mediums.

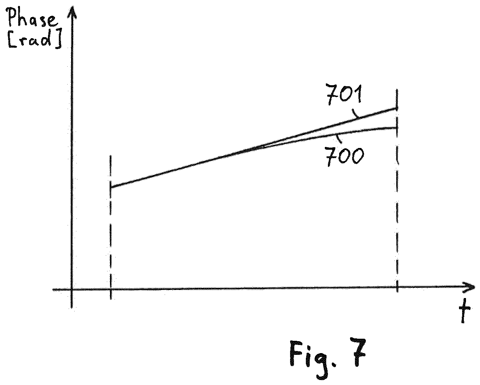

In Fig. 7 ist sowohl der Phasenverlauf 700 vor der Anwendung der Dispersionskorrektur als auch der dispersionskorrigierte Phasenverlauf 701 als Funktion der Zeit aufgetragen. Eigentlich sollte die Phase des Zeitsignals linear mit der Zeit ansteigen. Infolge der dispersiven Effekte weist der Phasenverlauf 700 vor der Anwendung der Dispersionskorrektur jedoch eine gewisse Krümmung bzw. Verzerrung auf. Diese Krümmung bzw. Verzerrung wird durch die Anwendung der Phasenkorrektur $\varphi_{z,corr}$ beseitigt, und man erhält den phasenkorrigierten Phasenverlauf 701, bei dem die Phase linear mit der Zeit ansteigt. Vorzugsweise wird der Phasenverlauf in mehreren Iterationen entzerrt und begradigt. Aus der Phasensteigung des korrigierten Phasenverlaufs 701 kann dann die Zielentfernung R mit hoher Genauigkeit ermittelt werden.

**Überlagerung von mehreren Moden mit unterschiedlichem Ausbreitungsverhalten**

Bisher war der Fall diskutiert worden, dass im Wesentlichen nur eine einzige Mode in signifikantem Ausmaß angeregt wird. Im Folgenden wird der Fall diskutiert, dass die Anregungsenergie sich auf mehrere unterschiedliche Moden aufteilt, von denen sich jede mit einem anderen Ausbreitungsverhalten im Rohr ausbreitet. Es wird also ein Gemisch aus mehreren Moden angeregt, und die eingekopppelte Energie verteilt sich auf mehrere Moden. Jede der angeregten $TE_{m,n}$- und $TM_{m,n}$-Moden ist durch ein anderes Ausbreitungsverhalten gekennzeichnet. Jede der angeregten $TE_{m,n}$- und $TM_{m,n}$-Moden besitzt eine eigene Cutoff-Frequenz $\hat{f}_{c,mn}$.

Entsprechend Gleichung (21) kann für jede angeregte Mode j eine zugehörige Phasenkorrektur $\varphi_{z,corr,j}(t)$ wie folgt angegeben werden:

$$\varphi_{z,corr,j}(t) = 2\pi\frac{2R}{c}\cdot\left(\sqrt{(f_0 + St)^2 - \hat{f}_{c,mn}^{\ 2}} - \sqrt{f_0^{\ 2} - \hat{f}_{c,mn}^{\ 2}}\right) - 2\pi\frac{2RS}{v_{const}}\cdot t \qquad (34)$$

Dabei bezeichnet $\hat{f}_{c,mn}$ die jeweilige Cutoff-Frequenz der Mode j. Der erste Term dient zu Verringerung bzw. Beseitigung der dispersiven Effekte der jeweiligen Mode j. Der zweite Term dient dazu, eine linear mit der Zeit ansteigende Phase hinzuzufügen.

Die Phasenkorrekturen für die verschiedenen angeregten Moden werden nun phasenrichtig aufsummiert. Die einzelnen Korrektursignale $z_{corr,j}(t)$ für die einzelnen Moden ergeben sich wie folgt:

$$z_{corr,j}(t) = \cos\left(\varphi_{z,corr,j}(t)\right) \qquad (35)$$

Das gesamte Korrektursignal $z_{corrr,sum}(t)$ erhält man aus der gewichteten Addition der einzelnen Korrektursignale $z_{corr,j}(t)$ für die einzelnen Moden:

$$z_{corr,sum}(t) = \sum_{TE_{m,n},TM_{m,n}} w_j \cdot z_{corr,j}(t) \qquad (36)$$

Die einzelnen Korrektursignale $z_{corr,j}(t)$ werden entsprechend ihrem Beitrag zum Gesamtsignal mit zugehörigen Amplitudengewichtungsfaktoren $w_j$ gewichtet. Das so erhaltene gesamte Korrektursignal $z_{corrr,sum}(t)$ ist dazu ausgelegt, für jede Mode den durch die jeweilige Mode verursachten dispersionsabhängigen Phasenanteil im Phasenverlauf des Zwischenfrequenzsignals zu verringern oder zu beseitigen. Außerdem wird dem Phasenverlauf ein nicht von Dispersionseffekten abhängiger Term hinzugefügt, der linear mit der Zeit ansteigt. Das Korrektursignal $z_{corrr,sum}(t)$ kann dann zur Korrektur des gemessenen Signals verwendet werden:

$$\hat{z}_{phasenkorrigiert}(t) = Re\left\{\frac{H\{z_{gemessen}(t)\}}{H\{z_{corr,sum}(t)\}}\right\} \qquad (37)$$

**Patentansprüche**

**1.** Radarmessvorrichtung (104, 111) zur Bestimmung einer Entfernung zu einer Oberfläche eines Mediums (101, 108) oder zu einem anderen Radarziel in einem Rohr (102, 107), wobei die Radarmessvorrichtung entsprechend dem FMCW-Prinzip arbeitet und aufweist:

eine Radarsendeeinheit, welche dazu ausgelegt ist, ein Radarsendesignal (213) zu erzeugen, das entsprechend dem FMCW-Prinzip frequenzmoduliert ist,
eine Radarempfangseinheit, welche dazu ausgelegt ist, ein an der Oberfläche des Mediums (101, 108) oder an dem anderen Radarziel im Rohr (102, 107) zurückreflektiertes Radarempfangssignal zu empfangen, das Radarempfangssignal durch Mischen mit dem Radarsendesignal (213) oder einem davon abgeleiteten Signal in ein Zwischenfrequenzsignal (211) umzuwandeln und anhand des so erhaltenen Zwischenfrequenzsignals (211) eine Entfernung zur Oberfläche des Mediums (101, 108) oder zu dem anderen Radarziel im Rohr (102, 107) zu bestimmen,
**dadurch gekennzeichnet,**
**dass** die Radarempfangseinheit dazu ausgelegt ist, eine Phasenkorrektur auf den Phasenverlauf des Zwischenfrequenzsignals (211) anzuwenden und ein phasenkorrigiertes Zwischenfrequenzsignal zu erzeugen, wobei die Phasenkorrektur dazu ausgelegt ist, einen dispersionsabhängigen Phasenanteil im Phasenverlauf des Zwischenfrequenzsignals (211) zu verringern oder zu beseitigen und einen nicht von Dispersionseffekten abhängigen Phasenanteil hinzuzufügen,
wobei die Radarempfangseinheit dazu ausgelegt ist, anhand des phasenkorrigierten Zwischenfrequenzsignals die Zielfrequenzkomponenten (501) im Zwischenfrequenzsignal zu bestimmen und anhand der Zielfrequenzkomponenten (501) die Entfernung zur Oberfläche des Mediums (101, 108) oder zu dem anderen Radarziel im Rohr (102, 107) zu bestimmen.

2. Radarmessvorrichtung gemäß Anspruch 1, **dadurch gekennzeichnet, dass** die Radarmessvorrichtung dazu ausgelegt ist, eine oder mehrere der folgenden Operationen auf das Zwischenfrequenzsignal anzuwenden:

   - Entfernen eines Gleichanteils des Zwischenfrequenzsignals;
   - Umwandeln des Zwischenfrequenzsignals in ein komplexwertiges Signal mittels einer Hilbert-Transformation;
   - Durchführen einer Fourier-Transformation zur Erzeugung eines Frequenzspektrums des Zwischenfrequenzsignals;
   - Detektieren von Zielfrequenzkomponenten im Frequenzspektrum des Zwischenfrequenzsignals.

3. Radarmessvorrichtung gemäß Anspruch 1 oder Anspruch 2, **gekennzeichnet durch** mindestens eines von folgenden:

   - die Radarmessvorrichtung ist dazu ausgelegt, auf das Zwischenfrequenzsignal eine gerätespezifische Korrektur anzuwenden, die dazu vorgesehen ist, ein gerätespezifisches Übertragungsverhalten der Radarmessvorrichtung zu berücksichtigen;
   - die Radarmessvorrichtung ist dazu ausgelegt, auf das Zwischenfrequenzsignal eine gerätespezifische Korrektur anzuwenden, die dazu vorgesehen ist, ein gerätespezifisches Übertragungsverhalten der Radarmessvorrichtung zu berücksichtigen, wobei die gerätespezifische Korrektur mittels einer Referenzmessung an einem Referenzziel bestimmbar ist;
   - die Radarmessvorrichtung ist dazu ausgelegt, auf das Zwischenfrequenzsignal eine gerätespezifische Korrektur anzuwenden, wobei zur Erzeugung der gerätespezifischen Korrektur die Übertragungsstrecke zwischen Radarmessvorrichtung und Radarziel in einen nicht dispersionsbehafteten Streckenanteil und einen dispersionsbehafteten Streckenanteil unterteilt wird.

4. Radarmessvorrichtung gemäß einem der Ansprüche 1 bis 3, **dadurch gekennzeichnet, dass** die Phasenkorrektur von der Entfernung zur Oberfläche des Mediums oder zu dem anderen Radarziel im Rohr abhängt.

5. Radarmessvorrichtung gemäß Anspruch 4, **gekennzeichnet durch** mindestens eines von folgenden:

   - die Radarempfangseinheit ist dazu ausgelegt, die Phasenkorrektur basierend auf einem Schätzwert der Entfernung zur Oberfläche des Mediums oder zu dem anderen Radarziel im Rohr zu bestimmen;
   - die Radarempfangseinheit ist dazu ausgelegt, bei der erstmaligen Bestimmung der Phasenkorrektur einen Schätzwert für die Entfernung zur Oberfläche des Mediums oder zu dem anderen Radarziel im Rohr zu verwenden;
   - die Radarempfangseinheit ist dazu ausgelegt, bei der erstmaligen Bestimmung der Phasenkorrektur einen Schätzwert für die Entfernung zur Oberfläche des Mediums oder zu dem anderen Radarziel im Rohr zu verwenden und die so bestimmte Phasenkorrektur anschließend auf das Zwischenfrequenzsignal anzuwenden.

6. Radarmessvorrichtung gemäß Anspruch 5, **gekennzeichnet durch** mindestens eines von folgenden:

- die Radarempfangseinheit ist dazu ausgelegt, den Schätzwert durch Auswerten der Zielfrequenzkomponenten des ursprünglichen, nicht phasenkorrigierten Zwischenfrequenzsignals zu ermitteln;
- die Radarempfangseinheit ist dazu ausgelegt, die Entfernung zur Oberfläche des Mediums oder zu dem anderen Radarziel im Rohr zyklisch wiederkehrend zu bestimmen und aus den bisher bestimmten Werten der Entfernung einen Schätzwert der Entfernung abzuleiten, der dann als Basis für die Bestimmung der Phasenkorrektur dient.

7. Radarmessvorrichtung gemäß einem der Ansprüche 4 bis 6, **dadurch gekennzeichnet, dass** die Radarempfangseinheit dazu ausgelegt ist, die von der Entfernung abhängige Phasenkorrektur und die von der Phasenkorrektur abhängige Entfernung zur Oberfläche des Mediums oder zu dem anderen Radarziel im Rohr in wechselseitiger Abhängigkeit mittels eines iterativen Verfahrens zu bestimmen.

8. Radarmessvorrichtung gemäß einem der Ansprüche 4 bis 7, **dadurch gekennzeichnet, dass** die Radarempfangseinheit dazu ausgelegt ist, abwechselnd und in wechselseitiger Abhängigkeit folgende zwei Schritte auszuführen:

   - Neubestimmen der Phasenkorrektur basierend auf einem neu bestimmten Wert der Entfernung und anschließend Anwenden der neubestimmten Phasenkorrektur auf das Zwischenfrequenzsignal, und
   - Neubestimmen des Werts der Entfernung basierend auf einer Analyse der Zielfrequenzkomponenten in dem neubestimmten phasenkorrigierten Zwischenfrequenzsignal.

9. Radarmessvorrichtung gemäß einem der Ansprüche 4 bis 8, **dadurch gekennzeichnet, dass** die Radarempfangseinheit dazu ausgelegt ist, die Phasenkorrektur und die Entfernung abwechselnd iterativ in wechselseitiger Abhängigkeit so oft zu bestimmen, bis sowohl die Phasenkorrektur als auch die Entfernung mit einer vorgegebenen Genauigkeit bestimmt sind.

10. Radarmessvorrichtung gemäß einem der Ansprüche 1 bis 9, **gekennzeichnet durch** mindestens eines von folgenden:

    - die Phasenkorrektur umfasst einen dispersionsabhängigen Term, der dazu ausgelegt ist, den dispersionsabhängigen Phasenanteil im Phasenverlauf des Zwischenfrequenzsignals zu verringern oder zu beseitigen;
    - die Phasenkorrektur umfasst einen dispersionsabhängigen Term, der dazu ausgelegt ist, den dispersionsabhängigen Phasenanteil im Phasenverlauf des Zwischenfrequenzsignals zu verringern oder zu beseitigen, wobei der dispersionsabhängige Term der Phasenkorrektur folgende Form hat:

    $$2\pi \frac{2R}{c} \cdot \left( \sqrt{(f_0 + St)^2 - \hat{f}_c^{\,2}} - \sqrt{f_0^{\,2} - \hat{f}_c^{\,2}} \right),$$

    wobei R die Entfernung zur Oberfläche des Mediums oder zu dem anderen Radarziel im Rohr bezeichnet, wobei c die Lichtgeschwindigkeit in Luft bezeichnet, wobei $f_0$ die Startfrequenz der Frequenzrampe und S die Steigung der Frequenzrampe des Radarsendesignals bezeichnet, und wobei $\hat{f}_c$ die Cutoff-Frequenz einer dominierenden Mode im Rohr bezeichnet;
    - der nicht von Dispersionseffekten abhängige Phasenanteil, der durch die Phasenkorrektur hinzugefügt wird, steigt linear mit der Zeit an;
    - der nicht von Dispersionseffekten abhängige Phasenanteil, der durch die Phasenkorrektur hinzugefügt wird, hängt von der Entfernung zur Oberfläche des Mediums oder zu dem anderen Radarziel im Rohr ab;
    - die Phasenkorrektur umfasst einen nicht dispersionsabhängigen Term, der dazu ausgelegt ist, den nicht von Dispersionseffekten abhängigen Phasenanteil zum Phasenverlauf des Zwischenfrequenzsignals hinzuzufügen, wobei der nicht von Dispersionseffekten abhängige Phasenanteil linear mit der Zeit ansteigt;
    - die Phasenkorrektur umfasst einen nicht dispersionsabhängigen Term, der dazu ausgelegt ist, den nicht von Dispersionseffekten abhängigen Phasenanteil zum Phasenverlauf des Zwischenfrequenzsignals hinzuzufügen, wobei der nicht von Dispersionseffekten abhängige Phasenanteil von der Entfernung zur Oberfläche des Mediums oder zu dem anderen Radarziel im Rohr abhängt;
    - die Phasenkorrektur umfasst einen nicht dispersionsabhängigen Term, der dazu ausgelegt ist, den nicht von Dispersionseffekten abhängigen Phasenanteil zum Phasenverlauf des Zwischenfrequenzsignals hinzuzufügen,

    $$-2\pi \frac{2RS}{v_{const}} \cdot t,$$

    wobei der nicht dispersionsabhängige Term der Phasenkorrektur folgende Form hat:     wobei R die Entfernung zur Oberfläche des Mediums oder zu dem anderen Radarziel im Rohr bezeichnet, wobei S die Steigung der Frequenzrampe des Radarsendesignals bezeichnet, und wobei $v_{const}$ eine Ausbreitungsgeschwindigkeit des Radarsendesignals bezeichnet, die frei festlegbar ist.

11. Radarmessvorrichtung gemäß einem der Ansprüche 1 bis 10, **dadurch gekennzeichnet, dass** die Radarmessvorrichtung dazu ausgelegt ist, eine oder mehrere der folgenden Operationen auf das Zwischenfrequenzsignal anzuwenden:

- Entfernen eines Gleichanteils des Zwischenfrequenzsignals;
- Umwandeln des Zwischenfrequenzsignals in ein komplexwertiges Signal mittels einer Hilbert-Transformation;
- Durchführen einer Fourier-Transformation des Zwischenfrequenzsignals zur Erzeugung eines Frequenzspektrum des Zwischenfrequenzsignals;
- Bestimmen einer relevanten Zielfrequenzkomponente, die der Entfernung zur Oberfläche des Mediums oder zu dem anderen Radarziel im Rohr entspricht;
- Festlegen eines Bandpassfilters für eine relevante Zielfrequenzkomponente, das dazu ausgelegt ist, die relevante Zielfrequenzkomponente durchzulassen und andere Zielfrequenzkomponenten zu unterdrücken;
- Bandpassfiltern des Frequenzspektrums des Zwischenfrequenzsignals und Erzeugen eines bandpassgefilterten Frequenzspektrums;
- Durchführen einer inversen Fourier-Transformation eines bandpassgefilterten Frequenzspektrums und Erzeugen eines bereinigten Zwischenfrequenzsignals;
- Bestimmen einer Phasensteigung im Phasenverlauf eines bereinigten Zwischenfrequenzsignals.

12. Radarmessvorrichtung gemäß einem der Ansprüche 1 bis 11, **dadurch gekennzeichnet, dass** die Radarmessvorrichtung dazu ausgelegt ist, eine oder mehrere der folgenden Operationen auf das Zwischenfrequenzsignal anzuwenden:

- Bestimmen einer Phasensteigung im Phasenverlauf des bereinigten Zwischenfrequenzsignals;
- Bestimmen der Entfernung zur Oberfläche des Mediums oder zu dem anderen Radarziel im Rohr aus der Phasensteigung im Phasenverlauf des bereinigten Zwischenfrequenzsignals;
- Neubestimmen der Phasenkorrektur basierend auf der neubestimmten Entfernung;
- Anwenden der neubestimmten Phasenkorrektur auf das bereinigte Zwischenfrequenzsignal.

13. Radarmessvorrichtung gemäß einem der Ansprüche 1 bis 12, **gekennzeichnet durch** mindestens eines von folgenden:

- die Ausbreitung eines Radarsignals im Rohr erfolgt im Wesentlichen entsprechend einer dominierenden Mode;
- als dominierende Mode für die Ausbreitung des Radarsignals im Rohr ist die Mode $TE_{01}$ vorhanden.

14. Radarmessvorrichtung gemäß einem der Ansprüche 1 bis 12, **gekennzeichnet durch** mindestens eines von folgenden:

- die Ausbreitung eines Radarsignals im Rohr erfolgt entsprechend einer Mehrzahl von unterschiedlichen Moden;
- die Ausbreitung eines Radarsignals im Rohr erfolgt entsprechend einer Mehrzahl von unterschiedlichen Moden, und die Phasenkorrektur ist dazu ausgelegt, für jede Mode einen durch die jeweilige Mode verursachten dispersionsabhängigen Phasenanteil im Phasenverlauf des Zwischenfrequenzsignals zu verringern oder zu beseitigen;
- die Ausbreitung eines Radarsignals im Rohr erfolgt entsprechend einer Mehrzahl von unterschiedlichen Moden, und die Phasenkorrektur ist dazu ausgelegt, dem Phasenverlauf einen nicht von Dispersionseffekten abhängigen Term hinzuzufügen, der linear mit der Zeit ansteigt.

15. Radarmessvorrichtung gemäß einem der Ansprüche 1 bis 14, **gekennzeichnet durch** mindestens eines von folgenden:

- bei dem Medium handelt es sich um eine Flüssigkeit oder um ein Schüttgut;
- bei dem Rohr handelt es sich um ein Schwallrohr oder um ein Bypassrohr;
- die Radarempfangseinheit ist dazu ausgelegt, aus der Entfernung zur Oberfläche des Mediums einen Füllstand des Mediums im Rohr zu bestimmen;
- die Radarmessvorrichtung ist als Feldgerät ausgebildet, welches über einen Feldbus mit einer Steuerung verbindbar ist;
- bei der Radarmessvorrichtung handelt es sich um ein Füllstandsmessgerät für die Prozessautomatisierung.

16. Verfahren zur Bestimmung einer Entfernung zu einer Oberfläche eines Mediums (101, 108) oder zu einem anderen Radarziel in einem Rohr (102, 107) mittels einer Radarmessvorrichtung (104, 111), welche entsprechend dem Prinzip des FMCW-Radars arbeitet, wobei das Verfahren aufweist:

- Aussenden eines Radarsendesignals (213) innerhalb des Rohrs (102, 107), wobei das Radarsendesignal (213) entsprechend dem FMCW-Prinzip frequenzmoduliert ist,
- Empfangen eines an einer Oberfläche des Mediums (101, 108) oder an dem anderen Radarziel im Rohr (102, 107) zur Radarmessvorrichtung (104, 111) zurückreflektierten Radarempfangssignals,
- Mischen des Radarempfangssignals mit dem Radarsendesignal (213) oder einem davon abgeleiteten Signal und Erzeugen eines Zwischenfrequenzsignals (211),

**dadurch gekennzeichnet dass** das Verfahren weiter aufweist:

- Anwenden einer Phasenkorrektur auf den Phasenverlauf des Zwischenfrequenzsignals (211) und Erzeugen eines phasenkorrigierten Zwischenfrequenzsignals, wobei die Phasenkorrektur zum einen einen dispersionsabhängigen Phasenanteil im Phasenverlauf des Zwischenfrequenzsignals (211) verringert oder beseitigt und zum anderen einen nicht von Dispersionseffekten abhängigen Phasenanteil zum Phasenverlauf des Zwischenfrequenzsignals (211) hinzufügt,
- Bestimmen der im phasenkorrigierten Zwischenfrequenzsignal enthaltenen Zielfrequenzkomponenten (501) und Bestimmen der Entfernung zur Oberfläche des Mediums (101, 108) oder zu dem anderen Radarziel im Rohr (102, 107) anhand der Zielfrequenzkomponenten (501).

17. Verfahren gemäß Anspruch 16, **gekennzeichnet durch** mindestens eines von folgenden:

- Entfernen eines Gleichanteils des Zwischenfrequenzsignals;
- Umwandeln des Zwischenfrequenzsignals in ein komplexwertiges Signal mittels einer Hilbert-Transformation;
- Durchführen einer Fourier-Transformation zur Erzeugung eines Frequenzspektrums des Zwischenfrequenzsignals;
- Detektieren von Zielfrequenzkomponenten im Frequenzspektrum des Zwischenfrequenzsignals.

18. Verfahren gemäß Anspruch 16 oder Anspruch 17, **dadurch gekennzeichnet, dass** die Phasenkorrektur von der Entfernung zur Oberfläche des Mediums oder zu dem anderen Radarziel im Rohr abhängt.

19. Verfahren gemäß Anspruch 18, **gekennzeichnet durch** mindestens eines von folgenden:

- Bestimmen der Phasenkorrektur basierend auf einem Schätzwert der Entfernung zur Oberfläche des Mediums oder zu dem anderen Radarziel im Rohr;
- bei der erstmaligen Bestimmung der Phasenkorrektur, Verwenden eines Schätzwerts für die Entfernung zur Oberfläche des Mediums oder zu dem anderen Radarziel im Rohr;
- bei der erstmaligen Bestimmung der Phasenkorrektur, Verwenden eines Schätzwerts für die Entfernung zur Oberfläche des Mediums oder zu dem anderen Radarziel im Rohr und anschließend Anwenden der so bestimmten Phasenkorrektur auf das Zwischenfrequenzsignal.

20. Verfahren gemäß Anspruch 18 oder Anspruch 19, **dadurch gekennzeichnet, dass** die von der Entfernung abhängige Phasenkorrektur und die von der Phasenkorrektur abhängige Entfernung zur Oberfläche des Mediums oder zu dem anderen Radarziel im Rohr in wechselseitiger Abhängigkeit mittels eines iterativen Verfahrens bestimmt werden.

21. Verfahren gemäß einem der Ansprüche 18 bis 20, **dadurch gekennzeichnet, dass** abwechselnd und in wechselseitiger Abhängigkeit folgende zwei Schritte ausgeführt werden:

- Neubestimmen der Phasenkorrektur basierend auf einem neu bestimmten Wert der Entfernung und anschließend Anwenden der neubestimmten Phasenkorrektur auf das Zwischenfrequenzsignal, und
- Neubestimmen des Werts der Entfernung basierend auf einer Analyse der Zielfrequenzkomponenten in dem neubestimmten phasenkorrigierten Zwischenfrequenzsignal.

**Claims**

1. Radar measuring apparatus (104, 111) designed to determine a distance to a surface of a medium (101, 108) or to another radar target in a tube (102, 107), wherein the radar measuring apparatus functions according to the FMCW principle and comprises:

   a radar transmission unit which is designed to generate a radar transmission signal (213), which is frequency-modulated according to the FMCW principle,
   a radar reception unit which is designed to receive a radar reception signal that is reflected back at the surface of the medium (101, 108) or at the other radar target in the tube (102, 107), to convert the radar reception signal into an intermediate frequency signal (211) by mixing with the radar transmission signal (213) or a signal derived therefrom, and to determine a distance to the surface of the medium (101, 108) or to another radar target in the tube (102, 107) using the intermediate frequency signal (211) thus obtained,
   **characterized in that**
   the radar reception unit is designed to apply a phase correction to the phase curve of the intermediate frequency signal (211) and to generate a phase-corrected intermediate frequency signal,
   wherein the phase correction is designed to reduce or eliminate a dispersion-dependent phase component in the phase curve of the intermediate frequency signal (211) and to add a phase component that is not dependent on dispersion effects,
   wherein the radar reception unit is designed to determine the target frequency components (501) in the intermediate frequency signal using the phase-corrected intermediate frequency signal and to determine the distance to the surface of the medium (101, 108) or to the other radar target in the tube (102, 107) using the target frequency components (501).

2. Radar measuring apparatus as claimed in Claim 1, **characterized in that** the radar measuring apparatus is designed to apply one or more of the following operations to the intermediate frequency signal:

   - Removal of a DC component of the intermediate frequency signal;
   - Conversion of the intermediate frequency signal to a complex-value signal by means of a Hilbert transform;
   - Performance of a Fourier transform to generate a frequency spectrum of the intermediate frequency signal;
   - Detection of target frequency components in the frequency spectrum of the intermediate frequency signal.

3. Radar measuring apparatus as claimed in Claim 1 or 2, **characterized by** at least one of the following:

   - The radar measuring apparatus is designed to apply a device-specific correction to the intermediate frequency signal which is intended to take account of a device-specific transmission behavior of the radar measuring apparatus;
   - The radar measuring apparatus is designed to apply a device-specific correction to the intermediate frequency signal which is intended to take account of a device-specific transmission behavior of the radar measuring apparatus, wherein the device-specific correction can be determined by a reference measurement at a reference target;
   - The radar measuring apparatus is designed to apply a device-specific correction to the intermediate frequency signal, wherein, for the purposes of generating the device-specific correction, the transmission path between the radar measuring apparatus and the radar target is divided into a section subject to dispersion and a section not subject to dispersion.

4. Radar measuring apparatus as claimed in one of the Claims 1 to 3, **characterized in that** the phase correction depends on the distance to the surface of the medium or to the other radar target in the tube.

5. Radar measuring apparatus as claimed in Claim 4, **characterized by** at least one of the following:

   - The radar reception unit is designed to determine the phase correction based on an estimate for the distance to the surface of the medium or to the other radar target in the tube;
   - The radar reception unit is designed to use an estimate for the distance to the surface of the medium or to the other radar target in the tube during the first determination of the phase correction;
   - The radar reception unit is designed to use an estimate for the distance to the surface of the medium or to the other radar target in the tube during the first determination of the phase correction and to then apply the phase correction thus determined to the intermediate frequency signal.

**6.** Radar measuring apparatus as claimed in Claim 5, **characterized by** at least one of the following:

- The radar reception unit is designed to determine the estimate by evaluating the target frequency components of the original intermediate frequency signal that is not phase-corrected;
- The radar reception unit is designed to determine the distance to the surface of the medium or to another radar target in the tube in a recurrent cyclical manner and to derive from the distance values determined thus far an estimate of the distance which then serves as the basis for determining the phase correction.

**7.** Radar measuring apparatus as claimed in one of the Claims 4 to 6, **characterized in that** the radar reception unit is designed to determine, using an iterative process, the phase correction that depends on the distance, and the phase correction-dependent distance to the surface of the medium or to another radar target in the tube in an interdependent manner.

**8.** Radar measuring apparatus as claimed in one of the Claims 4 to 7, **characterized in that** the radar reception unit is designed to perform the following two steps in an alternate and interdependent manner:

- Redetermination of the phase correction based on a new value determined for the distance and subsequent application of the redetermined phase correction to the intermediate frequency signal, and
- Redetermination of the value for the distance based on an analysis of the target frequency components in the redetermined phase-corrected intermediate frequency signal.

**9.** Radar measuring apparatus as claimed in one of the Claims 4 to 8, **characterized in that** the radar reception unit is designed to repeatedly determine the phase correction and the distance in an alternate and interdependent manner until both the phase correction and the distance are determined with a prespecified accuracy.

**10.** Radar measuring apparatus as claimed in one of the Claims 1 to 9, **characterized by** at least one of the following:

- The phase correction comprises a dispersion-dependent term which is designed to reduce or eliminate the dispersion-dependent phase component in the phase curve of the intermediate frequency signal;
- The phase correction comprises a dispersion-dependent term which is designed to reduce or eliminate the dispersion-dependent phase component in the phase curve of the intermediate frequency signal, wherein the dispersion-dependent term of the phase correction has the following form:

$2\pi (2R/c) (\text{root} ((f_0 + St)^2 - f_c^2) - \text{root} (f_0^2 - f_c^2))$, where R is the distance to the surface of the medium or to another radar target in the tube, c is the speed of light in air, $f_0$ is the initial frequency of the frequency ramp and S is the slope of the frequency ramp of the radar transmission signal, and where $f_c$ is the cutoff frequency of a dominant mode in the tube;

- The phase component that does not depend on dispersion effects and which is added by the phase correction increases in a linear manner over time;
- The phase component that does not depend on dispersion effects and which is added by the phase correction depends on the distance to the surface of the medium or to another radar target in the tube;
- The phase correction comprises a non-dispersion-dependent term that is designed to add the phase component that does not depend on dispersion effects to the phase curve of the intermediate frequency signal, wherein the phase component that does not depend on dispersion effects increases in a linear manner over time;
- The phase correction comprises a non-dispersion-dependent term that is designed to add the phase component that does not depend on dispersion effects to the phase curve of the intermediate frequency signal, wherein the phase component that does not depend on dispersion effects depends on the distance to the surface of the medium or to another radar target in the tube;
- The phase correction comprises a non-dispersion-dependent term that is designed to add the phase component that does not depend on dispersion effects to the phase curve of the intermediate frequency signal, wherein the non-dispersion-dependent term of the phase correction has the following form:

- $2\pi (2RS/v_{const})\cdot t$, where R is the distance to the surface of the medium or to another radar target in the tube, S is the slope of the frequency ramp of the radar transmission signal and $v_{const}$ is a propagation speed of the radar transmission signal which can be freely defined.

**11.** Radar measuring apparatus as claimed in one of the Claims 1 to 10, **characterized in that** the radar measuring apparatus is designed to apply one or more of the following operations to the intermediate frequency signal;

- Removal of a DC component of the intermediate frequency signal;
- Conversion of the intermediate frequency signal to a complex-value signal by means of a Hilbert transform;
- Performance of a Fourier transform of the intermediate frequency signal to generate a frequency spectrum of the intermediate frequency signal;
- Determination of a relevant target frequency component which corresponds to the distance to the surface of the medium or to another radar target in the tube;
- Definition of a bandpass filter for a relevant target frequency component which is designed to let the relevant target frequency component through and to suppress other target frequency components;
- Bandpass filtering of the frequency spectrum of the intermediate frequency signal and generation of a bandpass-filtered frequency spectrum;
- Performance of an inverse Fourier transform of a bandpass-filtered frequency spectrum and generation of a corrected intermediate frequency signal;
- Determination of a phase slope in the phase curve of a corrected intermediate frequency signal.

12. Radar measuring apparatus as claimed in one of the Claims 1 to 11, **characterized in that** the radar measuring apparatus is designed to apply one or more of the following operations to the intermediate frequency signal:

- Determination of a phase slope in the phase curve of the corrected intermediate frequency signal;
- Determination of the distance to the surface of the medium or to another radar target in the tube from the phase slope in the phase curve of the corrected intermediate frequency signal;
- Redetermination of the phase correction based on the redetermined distance;
- Application of the redetermined phase correction to the corrected intermediate frequency signal.

13. Radar measuring apparatus as claimed in one of the Claims 1 to 12, **characterized by** at least one of the following:

- The propagation of a radar signal in the tube essentially takes place in accordance with a dominant mode;
- The $TE_{01}$ mode is present as the dominant mode for the propagation of the radar signal in the tube.

14. Radar measuring apparatus as claimed in one of the Claims 1 to 12, **characterized by** at least one of the following:

- The propagation of a radar signal in the tube takes place in accordance with a number of different modes;
- The propagation of a radar signal in the tube takes place in accordance with a number of different modes and the phase correction is designed to reduce or eliminate - for each mode - a dispersion-dependent phase component, which is caused by the particular mode, in the phase curve of the intermediate frequency signal;
- The propagation of a radar signal in the tube takes place in accordance with a number of different modes and the phase correction is designed to add to the phase curve a term that does not depend on dispersion effects and increases in a linear manner over time.

15. Radar measuring apparatus as claimed in one of the Claims 1 to 14, **characterized by** at least one of the following:

- The medium is a liquid or a bulk solid;
- The tube is a stilling well or a bypass tube;
- The radar reception unit is designed to determine a level of the medium in the tube from the distance of the surface of the medium;
- The radar measuring apparatus is designed as a field device which can be connected to a controller via a fieldbus;
- The radar measuring apparatus is a level transmitter for process automation.

16. Procedure for determining a distance to a surface of a medium (101, 108) or to another radar target in a tube (102, 107) using a radar measuring apparatus (104, 111), said apparatus functioning according to the FMCW principle, wherein the procedure involves the following steps:

- Transmission of a radar transmission signal (213) within a tube (102, 107), wherein the radar transmission signal (213) is frequency-modulated in accordance with the FMCW principle,
- Reception of a radar reception signal (104, 111) reflected back at a surface of the medium (101, 108) or at the other radar target in the tube (102, 107) to the radar measuring apparatus (104, 111),

- Mixing of the radar reception signal with the radar transmission signal (213) or a signal derived therefrom and generation of an intermediate frequency signal (211),

**characterized**

**in that** the procedure further involves the following steps:

- Application of a phase correction to the phase curve of the intermediate frequency signal (211) and generation of a phase-corrected intermediate frequency signal, wherein the phase correction reduces or eliminates a dispersion-dependent phase component in the phase curve of the intermediate frequency signal (211) and adds a phase component, which does not depend on dispersion effects, to the phase curve of the intermediate frequency signal (211),
- Determination of the target frequency components (501) contained in the phase-corrected intermediate frequency signal and determination of the distance to the surface of the medium (101, 108) or to the other radar target in the tube (102, 107) using the target frequency components (501).

17. Procedure as claimed in Claim 16, **characterized by** at least one of the following:

- Removal of a DC component of the intermediate frequency signal;
- Conversion of the intermediate frequency signal to a complex-value signal by means of a Hilbert transform;
- Performance of a Fourier transform to generate a frequency spectrum of the intermediate frequency signal;
- Detection of target frequency components in the frequency spectrum of the intermediate frequency signal.

18. Procedure as claimed in Claim 16 or Claim 17, **characterized in that** the phase correction depends on the distance to the surface of the medium or to another radar target in the tube.

19. Procedure as claimed in Claim 18, **characterized by** at least one of the following points:

- Determination of the phase correction based on an estimate of the distance to the surface of the medium or to another radar target in the tube;
- When the phase correction is determined for the first time, use of an estimate for the distance to the surface of the medium or to another radar target in the tube;
- When the phase correction is determined for the first time, use of an estimate for the distance to the surface of the medium or to another radar target in the tube and subsequent application of the phase correction thus determined to the intermediate frequency signal.

20. Procedure as claimed in Claim 18 or Claim 19, **characterized in that** the phase correction that depends on the distance, and the phase correction-dependent distance to the surface of the medium or to another radar target in the tube is repeatedly determined in an interdependent manner.

21. Procedure as claimed in one of the Claims 18 to 20, **characterized in that** the following two steps are performed in an alternate and interdependent manner:

- Redetermination of the phase correction based on a new value determined for the distance and subsequent application of the redetermined phase correction to the intermediate frequency signal, and
- Redetermination of the value for the distance based on an analysis of the target frequency components in the redetermined phase-corrected intermediate frequency signal.

**Revendications**

1. Dispositif de mesure radar (104, 111) destiné à la détermination d'une distance par rapport à une surface d'un produit (101, 108) ou par rapport à une autre cible radar à l'intérieur d'un tube (102, 107), le dispositif de mesure radar fonctionnant d'après le principe FMCW et comportant :

une unité d'émission radar, laquelle est conçue de telle sorte à générer un signal d'émission radar (213), qui est modulé en fréquence d'après le principe FMCW,
une unité de réception radar, laquelle est conçue de telle sorte à recevoir un signal de réception radar réfléchi à la surface du produit (101, 108) ou sur une autre cible radar à l'intérieur du tube (102, 107), à convertir en un signal de fréquence intermédiaire le signal de réception radar par un mélange avec le signal d'émission radar (213) ou un signal dérivé de ce dernier, et à déterminer à l'aide du signal de fréquence intermédiaire (211) ainsi obtenu une distance par rapport à la surface du produit (101, 108) ou par rapport à l'autre cible radar (102, 107) à l'intérieur du tube,

**caractérisé**

**en ce que** l'unité de réception radar est conçue de telle sorte à appliquer une correction de phase sur la courbe de phase du signal de fréquence intermédiaire (211) et à générer un signal de fréquence intermédiaire corrigé en phase,

la correction de phase étant réalisée de telle sorte à diminuer ou à éliminer la composante phasique dépendant de la dispersion au sein de la courbe de phase du signal de fréquence intermédiaire (211) et à ajouter une composante phasique indépendante des effets de dispersion,

l'unité de réception radar étant conçue de telle sorte à déterminer au moyen du signal de fréquence intermédiaire corrigé en phase les composantes de fréquence cible (501) au sein du signal de fréquence intermédiaire et à déterminer au moyen des composantes de fréquence cible (501) la distance par rapport à la surface du produit (101, 108) ou par rapport à l'autre cible radar (102, 107) à l'intérieur du tube.

2. Dispositif de mesure radar selon la revendication 1, **caractérisé en ce que** le dispositif de mesure radar est conçu de telle sorte à appliquer au signal de fréquence intermédiaire une ou plusieurs des opérations suivantes :

- Suppression d'une composante continue du signal de fréquence intermédiaire ;
- Conversion du signal de fréquence intermédiaire en un signal de valeur complexe au moyen d'une transformation de Hilbert ;
- Exécution d'une transformation de Fourier en vue de la génération d'un spectre de fréquence du signal de fréquence intermédiaire ;
- Détection de composantes de fréquence cible au sein du spectre de fréquence du signal de fréquence intermédiaire.

3. Dispositif de mesure radar selon la revendication 1 ou 2, **caractérisé par** au moins l'un des points suivants :

- le dispositif de mesure radar est conçu de telle sorte à appliquer au signal de fréquence intermédiaire une correction spécifique à l'appareil, qui est prévue pour prendre en compte un comportement de transmission spécifique à l'appareil du dispositif de mesure radar ;
- le dispositif de mesure radar est conçu de telle sorte à appliquer au signal de fréquence intermédiaire une correction spécifique à l'appareil, qui est prévue pour prendre en compte un comportement de transmission spécifique à l'appareil du dispositif de mesure radar, la correction spécifique à l'appareil pouvant être déterminée au moyen d'une mesure de référence sur une cible de référence ;
- le dispositif de mesure radar est conçu de telle sorte à appliquer au signal de fréquence intermédiaire une correction spécifique à l'appareil, la distance de transmission entre le dispositif de mesure radar et la cible radar étant scindée en un segment non sujet à dispersion et un segment sujet à dispersion en vue de la génération de la correction spécifique à l'appareil.

4. Dispositif de mesure radar selon l'une des revendications 1 à 3, **caractérisé en ce que** la correction de phase dépend de la distance par rapport à la surface du produit ou par rapport à l'autre cible radar à l'intérieur du tube.

5. Dispositif de mesure radar selon la revendication 4, **caractérisé par** au moins l'un des points suivants :

- l'unité de réception radar est conçue de telle sorte à déterminer la correction de phase sur la base d'une estimation de la distance par rapport à la surface du produit ou par rapport à une autre cible radar à l'intérieur du tube ;
- l'unité de réception radar est conçue de telle sorte à utiliser, lors de la première détermination de la correction de phase, une estimation pour la distance par rapport à la surface du produit ou par rapport à une autre cible radar à l'intérieur du tube ;
- l'unité de réception radar est conçue de telle sorte à utiliser, pour la première détermination de la correction de phase, une estimation pour la distance par rapport à la surface du produit ou par rapport à l'autre cible radar à l'intérieur du tube et à appliquer ensuite au signal de fréquence intermédiaire la correction de phase ainsi déterminée.

6. Dispositif de mesure radar selon la revendication 5, **caractérisé par** au moins l'un des points suivants :

- l'unité de réception radar est conçue de telle sorte à déterminer la valeur estimée par une évaluation des composantes de fréquence cible du signal de fréquence intermédiaire d'origine, non corrigé en phase ;
- l'unité de réception radar est conçue de telle sorte à déterminer de façon cycliquement récurrente la distance par rapport à la surface du produit ou par rapport à l'autre cible radar à l'intérieur du tube et à dériver à partir des valeurs de distance déterminées jusqu'ici une valeur estimée de la distance, qui sert ensuite de base à la détermination de la correction de phase.

7. Dispositif de mesure radar selon l'une des revendications 4 à 6, **caractérisé en ce que** l'unité de réception radar est conçue de telle sorte à déterminer la correction de phase dépendant de la distance et la distance dépendant de la correction de phase par rapport à la surface du produit ou par rapport à une autre cible radar à l'intérieur du tube, de façon interdépendante au moyen d'une méthode itérative.

8. Dispositif de mesure radar selon l'une des revendications 4 à 7, **caractérisé en ce que** l'unité de réception radar est conçue de telle sorte à exécuter, de façon alternative et interdépendante, les deux étapes suivantes :

   - Nouvelle détermination de la correction de phase sur la base d'une valeur nouvellement déterminée de la distance et application consécutive de la correction de phase nouvellement déterminée au signal de fréquence intermédiaire, et
   - Nouvelle détermination de la valeur de la distance sur la base d'une analyse des composantes de fréquence cible au sein du signal de fréquence intermédiaire corrigé en phase, nouvellement déterminé.

9. Dispositif de mesure radar selon l'une des revendications 4 à 8, **caractérisé en ce que** l'unité de réception radar est conçue de telle sorte à déterminer la correction de phase et la distance, de façon alternative et interdépendante, autant de fois jusqu'à ce qu'aussi bien la correction de phase que la distance soient déterminées avec une précision prédéfinie.

10. Dispositif de mesure radar selon l'une des revendications 1 à 9, **caractérisé par** au moins l'un des points suivants :

    - La correction de phase comprend un terme dépendant de la dispersion, lequel est conçu de telle sorte à diminuer ou éliminer la composante phasique dépendant de la dispersion au sein de la courbe de phase du signal de fréquence intermédiaire ;
    - La correction de phase comprend un terme dépendant de la dispersion, lequel est conçu de telle sorte à diminuer ou éliminer la composante phasique dépendant de la dispersion au sein de la courbe de phase du signal de fréquence intermédiaire, le terme dépendant de la dispersion de la correction de phase présentant la forme suivante :

      $2\pi$ (2R/c) (Racine (($f_0 + St)^2 - f_c^2$) - Racine ($f_0^2 - f_c^2$)), où R représente la distance par rapport à la surface du produit ou par rapport à l'autre cible radar à l'intérieur du tube, c désigne la célérité de la lumière dans l'air, $f_0$ désigne la fréquence de départ de la rampe de fréquence et S la pente de la rampe de fréquence du signal d'émission radar, et où $f_c$ désigne la fréquence de coupure d'un mode dominant à l'intérieur du tube ;

    - La composante phasique non dépendante des effets de dispersion, qui est ajoutée par la correction de phase, augmente de façon linéaire avec le temps ;
    - La composante phasique non dépendante des effets de dispersion, qui est ajoutée par la correction de phase, dépend de la distance par rapport à la surface du produit ou par rapport à l'autre cible radar à l'intérieur du tube ;
    - La correction de phase comprend un terme non dépendant de la dispersion, lequel est conçu de telle sorte à ajouter à la courbe de phase du signal de fréquence intermédiaire la composante phasique dépendant des effets de dispersion, la composante phasique non dépendante des effets de dispersion augmentant de façon linéaire dans le temps ;
    - La correction de phase comprend un terme non dépendant de la dispersion, lequel est conçu de telle sorte à ajouter à la courbe de phase du signal de fréquence intermédiaire la composante phasique dépendant des effets de dispersion, la composante phasique non dépendante des effets de dispersion dépendant de la distance par rapport à la surface du produit ou par rapport à l'autre cible radar à l'intérieur du tube ;
    - La correction de phase comprend un terme non dépendant de la dispersion, lequel est conçu de telle sorte à ajouter à la courbe de phase du signal de fréquence intermédiaire la composante phasique dépendant des effets de dispersion, le terme non dépendant de la dispersion de la correction de phase présentant la forme suivante :

- $2\pi$ ($2RS/v_{const}$) · t, où R désigne la distance par rapport à la surface du produit ou par rapport à l'autre cible radar à l'intérieur du tube, S désigne la pente de la rampe de fréquence du signal d'émission radar et $v_{const}$ désigne une vitesse de propagation du signal d'émission radar, qui est librement définissable.

11. Dispositif de mesure radar selon l'une des revendications 1 à 10, **caractérisé en ce que** le dispositif de mesure radar est conçu de telle sorte à appliquer au signal de fréquence intermédiaire une ou plusieurs des opérations suivantes :

   - Suppression d'une composante continue du signal de fréquence intermédiaire ;
   - Conversion du signal de fréquence intermédiaire en un signal de valeur complexe au moyen d'une transformation de Hilbert ;
   - Exécution d'une transformation de Fourier du signal de fréquence intermédiaire en vue de la génération d'un spectre de fréquence du signal de fréquence intermédiaire ;
   - Détermination d'une composante de fréquence cible pertinente, qui correspond à la distance par rapport à la surface du produit ou par rapport à l'autre cible radar à l'intérieur du tube ;
   - Définition d'un filtre passe-bande pour une composante de fréquence cible pertinente, lequel filtre est conçu de telle sorte à laisser passer la composante de fréquence cible pertinente et à bloquer les autres composantes de fréquence cible ;

   Filtrage par filtre passe-bande du spectre de fréquence du signal de fréquence intermédiaire et génération d'un spectre de fréquence filtré par un filtre passe-bande ;

   - Exécution d'une transformation de Fourier inverse d'un spectre de fréquence filtré par un filtre passe-bande et génération d'un signal de fréquence intermédiaire nettoyé ;
   - Détermination d'une pente de phase au sein de la courbe de phase d'un signal de fréquence intermédiaire nettoyé.

12. Dispositif de mesure radar selon l'une des revendications 1 à 11, **caractérisé en ce que** le dispositif de mesure radar est conçu de telle sorte à appliquer au signal de fréquence intermédiaire une ou plusieurs des opérations suivantes :

   - Détermination d'une pente de phase au sein de la courbe de phase du signal de fréquence intermédiaire nettoyé ;
   - Détermination de la distance par rapport à la surface du produit ou par rapport à l'autre cible radar à l'intérieur du tube à partir de la pente de phase au sein de la courbe de phase du signal de fréquence intermédiaire nettoyé ;
   - Nouvelle détermination de la correction de phase basée sur la distance nouvellement déterminée ;
   - Application de la correction de phase nouvellement déterminée au signal de fréquence intermédiaire nettoyé.

13. Dispositif de mesure radar selon l'une des revendications 1 à 12, **caractérisé par** au moins l'un des points suivants :

   - La propagation d'un signal radar à l'intérieur du tube intervient pour l'essentiel conformément à un mode dominant ;
   - Le mode $TE_{01}$, est présent comme mode dominant pour la propagation du signal radar à l'intérieur du tube.

14. Dispositif de mesure radar selon l'une des revendications 1 à 12, **caractérisé par** au moins l'un des points suivants :

   - La propagation d'un signal radar à l'intérieur du tube intervient selon une majorité de modes différents ;
   - La propagation d'un signal radar à l'intérieur du tube intervient selon une majorité de modes différents et la correction de phase est conçue de telle sorte à diminuer ou éliminer pour chaque mode une composante phasique - causée par le mode respectif - dépendant de la dispersion au sein de la courbe de phase du signal de fréquence intermédiaire ;
   - La propagation d'un signal radar à l'intérieur du tube intervient selon une majorité de modes différents et la correction de phase est conçue de telle sorte à ajouter à la courbe de phase un terme dépendant des effets de dispersion, lequel terme augmente de façon linéaire avec le temps.

15. Dispositif de mesure radar selon l'une des revendications 1 à 14, **caractérisé par** au moins l'un des points suivants :

   - Concernant le produit, il s'agit d'un liquide ou d'une matière en vrac ;

- Concernant le tube, il s'agit d'un tube tranquilisateur ou d'un tube bypass ;
- L'unité de réception radar est conçue de telle sorte à déterminer à partir de la distance par rapport à la surface du produit un niveau de remplissage du produit à l'intérieur du tube ;
- Le dispositif de mesure radar est conçu en tant qu'appareil de terrain, lequel peut être relié avec un système de commande par l'intermédiaire d'un bus de terrain ;
- Concernant le dispositif de mesure radar, il s'agit d'un transmetteur de niveau destiné à l'automatisation des process.

**16.** Procédé destiné à la détermination d'une distance par rapport à une surface d'un produit (101, 108) ou par rapport à une autre cible radar à l'intérieur d'un tube (102, 107) au moyen d'un dispositif de mesure radar (104, 111), lequel fonctionne d'après le principe FMCW, le procédé comportant les étapes suivantes :

- Émission d'un signal d'émission radar (213) à l'intérieur du tube (102, 107), le signal d'émission radar (213) étant modulé en fréquence d'après le principe FMCW,
- Réception d'un signal de réception radar (104, 111) réfléchi sur une surface du produit (101, 108) ou sur une autre cible radar à l'intérieur du tube (102, 107) en direction du dispositif de mesure radar (104, 111),
- Mélange du signal de réception radar avec le signal d'émission radar (213) ou un signal dérivé de ce dernier et génération d'un signal de fréquence intermédiaire (211),

**caractérisé**
**en ce que** le procédé comprend en outre les étapes suivantes :

- Application d'une correction de phase à la courbe de phase du signal de fréquence intermédiaire (211) et génération d'un signal de fréquence intermédiaire corrigé en phase, la correction de phase réduisant ou éliminant d'une part une composante phasique dépendant de la dispersion au sein de la courbe de phase du signal de fréquence intermédiaire (211) et, d'autre part, ajoutant à la courbe de phase du signal de fréquence intermédiaire (211) une composante phasique non dépendante des effets de dispersion,
- Détermination des composantes de fréquence cible (501) contenues dans le signal de fréquence intermédiaire corrigé en phase et détermination de la distance par rapport à la surface du produit (101, 108) ou par rapport à une autre cible radar (102, 107) au moyen des composantes de fréquence cible (501).

**17.** Procédé selon la revendication 16, **caractérisé par** au moins l'un des points suivants :

- Suppression d'une composante continue du signal de fréquence intermédiaire ;
- Conversion du signal de fréquence intermédiaire en un signal de valeur complexe au moyen d'une transformation de Hilbert ;
- Exécution d'une transformation de Fourier en vue de la génération d'un spectre de fréquence du signal de fréquence intermédiaire ;
- Détection de composantes de fréquence cible au sein du spectre de fréquence du signal de fréquence intermédiaire.

**18.** Procédé selon la revendication 16 ou la revendication 17, **caractérisé en ce que** la correction de phase dépend de la distance par rapport à la surface du produit ou par rapport à la cible radar à l'intérieur du tube.

**19.** Procédé selon la revendication 18, **caractérisé par** au moins l'un des points suivants :

- Détermination de la correction de phase sur la base d'une estimation de la distance par rapport à la surface du produit ou par rapport à une autre cible radar à l'intérieur du tube ;
- Lors de la première détermination de la correction de phase, utilisation d'une valeur estimée pour la distance par rapport à la surface du produit ou par rapport à l'autre cible radar à l'intérieur du tube ;
- Lors de la première détermination de la correction de phase, utilisation d'une valeur estimée pour la distance par rapport à la surface du produit ou par rapport à l'autre cible radar à l'intérieur du tube et application consécutive au signal de fréquence intermédiaire de la correction de phase ainsi déterminée.

**20.** Procédé selon la revendication 18 ou la revendication 19, **caractérisé en ce que** la correction de phase dépendant de la distance et la distance dépendant de la correction de phase par rapport à la surface du produit ou par rapport à une autre cible radar à l'intérieur du tube sont déterminées de façon interdépendante au moyen d'une méthode itérative.

**21.** Procédé selon l'une des revendications 18 à 20, **caractérisé en ce que** les deux étapes suivantes sont exécutées de façon alternative et interdépendante :

- Nouvelle détermination de la correction de phase sur la base d'une valeur nouvellement déterminée de la distance et application consécutive de la correction de phase nouvellement déterminée au signal de fréquence intermédiaire, et
- Nouvelle détermination de la valeur de la distance sur la base d'une analyse des composantes de fréquence cible au sein du signal de fréquence intermédiaire corrigé en phase, nouvellement déterminé.

104

105

103 102

100

101

Fig. 1A

106 110 111

107

108 109

Fig. 1B

Fig. 2A

Fig. 2B

Fig. 3

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- US 20100070207 A1